# EUROPEAN PATENT APPLICATION

(11) **EP 3 425 872 A1**
(43) Date of publication of application: **09.01.2019**
(21) Application number: 18188447.9
(22) Date of filing: 06.12.2016
(51) Int. Cl.: H04L 29/06, H04L 12/58, H04M 3/56, H04L 29/08

(54) **DUAL-MODALITY CLIENT APPLICATION**

(30) Priority: 14.12.2015 IN 6701CH2015; 31.03.2016 US 201615087457
(62) Divisional of application: 16819239.1
(71) Applicant: Microsoft Technology Licensing, LLC, Redmond WA 98052-7329 (US)
(72) Inventor: CHANDRA, Saumya, Redmond, WA 98052-6399 (US); JOSHI, Varshesh, Redmond, WA 98052-6399 (US); MADHUKAR, Mohit, Redmond, WA 98052-6399 (US)
(74) Representative: Townsend, Martyn

(57) **Abstract**

A single dual-modality client application both group messaging and group board modalities for a selected user group. Both group messaging and group board data content is transmitted and received in group data objects. Each group data object comprises an indicator of modality denoting one of the two modalities. Separate group messaging and group board display interfaces are provided by the client application for the selected user group. Group messaging display data for displaying at least part of the content of the group messaging modality data objects associated with the currently selected group as a sequence of messages on the group messaging display interface, and group board display data for displaying at least part of the content of the group board modality data objects associated with the currently selected group as a collection of posted items on the group board display interface are generated by the client application.

## Description

### Background

Conventional communication systems allow the user of a device, such as a personal computer or mobile device, to communicate with other users over a packet-based communications network such as the Internet. An increasing variety of communications modalities are now being provided by different applications, such as mobile applications ("apps"), for example to instant-messaging apps, content sharing apps, VoIP (Voice over IP) call-based apps etc. As such users are being presented with more and more choices with regards to the communications apps they can choose to download and install on their mobile devices.

### Summary

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Various aspects of the present subject matter are directed to effecting communications between a group of users. A client application is executed on a processor of a user device available to one of the users to implement the following steps. Group data objects are transmitted and received between the user device and at least one other device via a network. Each of the group data objects comprises:
- an indication of user group denoting an associated one of a plurality of user groups,
- content for the associated user group, and
- an indication of modality denoting either a group messaging modality or a group board modality.

The client application receives a current selection of one of the plurality of user groups and, based on the indications of user group and the indications of modality, generates in memory of the user device for the currently selected group:
- group messaging display data for displaying at least part of the content of the group messaging modality data objects associated with the currently selected group as a sequence of messages on a group messaging display interface, and
- group board display data for displaying at least part of the content of the group board modality data objects associated with the currently selected group as a collection of posted items on a group board display interface.

The client application operates in a group messaging mode for the currently selected group by controlling the display based on the group messaging display data to display the sequence of messages on the group messaging display interface. In response to a mode switch instruction, the client application switches to a group board mode for the currently selected group by controlling the display based on the group messaging display data to display instead the collection of posted items on the group board display interface.

In this manner, a single application provides both group messaging and group board modalities for the same (i.e. the currently selected) user group via separate display interfaces of the single application.

### Brief Description of Figures

For a better understanding of the present subject matter, and to show how embodiments of the same may be carried into effect, reference is made by way of example only to the following figures, in which:
Figure 1 shows a block diagram of a communications system;
Figure 2 shows a block diagram of a user device;
Figure 2A shows functional modules of a client application;
Figure 3 shows a block diagram of a dual-modality server;
Figures 4A-4C illustrate a mode switch from a group messaging mode to a group board mode of a client application;
Figure 5 shows a computer implemented data structure, which is a group data object;
Figures 6A and 6B illustrate various interactions between a dual-modality server and an interoperability server;
Figure 7 shows an example login display interface displayed by a client application;
Figure 8 shows an example group selection display interface, displayed by a client application displayed by a client application;
Figure 9 shows example group selection display interfaces, and a group page interface for a selected group displayed by a client application;
Figures 10 and 11 show example group messaging display interfaces;
Figures 12 shows example group messaging and group board interfaces, at a time when the group messaging interface has been updated automatically, in response to a new item being posed on the group board interface, to display a notification of the new group board item on the group messaging interface;
Figure 13 shows how a scroll action may be applied to group messaging and group board display interfaces displayed by a client application;
Figure 14 shows examples of profile generation display interfaces displayed by a client application
Figures 15A-15D shows examples of how system notification may be generated on a group messaging interface pertaining to items on a group board interface;
Figures 16A and 16B show respectively a group messaging and a group board interface, both of which are filtered based on a single selection of a search term by a user.

### Detailed Description:

At present, there are a number of communication mobile applications ("apps"), each of which can provide a certain communications modality to enable users to coordinate as a group using a mobile device.

For example, dedicated group messaging ("chat") applications such as WhatsappTM and FacebookTM messenger are available on a variety of platforms and allow a group of users to exchange instant messages with one another in a group conversation thread. That is, which provide only a single communications modality, namely messaging: one-to-one messaging between two users, or group messaging between three or more users.

Dedicated messaging applications such as WhatsappTM and FacebookTM messenger allow users to post content, such as links or files, to a group conversation. However, this content remains embedded amongst the other messages posted to the group conversation thread. It is thus difficult for a user, using such an application, to navigate the messaging and content data separately. As more and more messages are posted to the group conversation it becomes increasingly difficult for a user to keep track of the content that has been posted the group. Even if a user is able to find a desired piece of content, it may still be difficult for the user to find messages, or other pieces of content, that are contextually relevant (i.e. related) to that piece of content.

As another example, dedicated content-sharing applications such as SharePointTM, OneNoteTM and DropBoxTM enable a group of users to share content (e.g. files) with one another, by providing an interface by which a user can upload a file that is made accessible to other user(s) of their choice. A link in the form of a URL is provided, which can be used by an authorized user to download the shared file.

Dedicated content-sharing applications such as SharePointTM, OneNoteTM and DropBoxTM provide a group of users with a common interface that can be used to access content shared by one of a particular group of users. These applications only provide a means of sharing content between users, but have no integrated messaging functionality. Rather, they rely on out-of-band communication between members to manage the shared content, for example by the users circulating links to shared content via email or using a separate messaging app of their choice.

By contrast, the present disclosure pertains to what is referred to herein as a "HiveOut" application. The HiveOut application is a dual-modality client application having a user interface (UI) that can operate in at least two different modes. When the HiveOut UI is operating in a group messaging mode, it displays a group messaging display interface, by which users in a group can send messages to other user in the group and view messages they have received from and sent to other users in the group. When switched to a group board mode, the HiveOut UI displays instead a separate but closely coupled content sharing display interface, in the form of a group board display interface, by which that same group of users can share important content by posting items to the group board and viewing items that they or other users in the group have posted to the board. That is, the HiveOut application is a client application having an integrated a group messaging interface and a separate, integrated content sharing interface (the group board interface), in such a way that a user may navigate seamlessly between the group messaging and group board content of a given group within the same application. That is, the HiveOut application conveniently provides separate interfaces for group messaging and group board - separating out messaging from content-sharing - whilst still integrating both modalities into the same application.

Whenever a board item is updated or added, a notification of the updated or new board item is displayed on the group messaging interface. As such the group messaging display interface for a given user group constitutes a complete history of all group activity group of that user group.

The notifications on the group messaging interface are selectable (e.g. tappable, on a touchscreen of the device), and when selected cause a switch to the group board interface, on which the board item corresponding to the notification is displayed. The corresponding board item is also highlighted on the group board interface whenever the user reaches the board by tapping the notification of that item on the group messaging interface, e.g. by applying a suitable visual highlighting effect to the corresponding group board item on the group board interface to visually distinguish it from other item(s) on the group board interface that are visible simultaneously.

Users can collaborate over group board items (i.e. group board content). That is, items posted on group board display interface can be items that the group is collaborating on together. Examples of such board items include, for example: a poll that is being changed continuously as users in the group vote; a checklist that can be updated to mark checklist elements of the checklist as complete or to add new checklist elements to the checklist; a document that users in the group can jointly edit etc. Changes to board items due to collaborations are treated as updates to the board. For example collaborative file editing; voting in a poll; maintaining a checklist etc. are all treated as updates, which cause corresponding notifications to be displayed on the group messaging interface.

In the described embodiments, the HiveOut application is a mobile application ("app") that is executed on a mobile device, such as a smartphone or tablet.

Mobile is at the front and centre of all work and life experiences today. Group work is essential for accomplishing professional and personal tasks. However, existing solutions are ill suited to collaboration using mobile devices: conversations are chaotic; information is scattered across several channels and progress is difficult to track or (at times) grasp, and it is there difficult to stay productive and efficient in mobile groups using existing mobile group communications software. In other words, existing mobile applications do not allow people to work effectively in groups via mobile devices.

A sequence of time ordered messages is presented on the group messaging interface. Items posted on the group board interface are also time ordered. The application enables a user to navigate between the group messaging interface and the group board interface, whilst retaining the context associated with the message or content data that was previously viewed. The user can instigate a mode switch instruction to switch from the group messaging interface by:
- performing a single swipe gesture in a predetermined direction (left, in the described examples), or
- by tapping a notification of a new or updated group board item that is displayed on the group messaging interface.

The user can instigate another mode switch instruction to navigate back to the group messaging interface from the group board interface by performing a single swipe gesture in the opposite direction.

For example, when a user scrolls though the sequence of messages on the group messaging interface to a particular time and then subsequently switches to the group board interface, posted items corresponding to substantially the same time are automatically displayed on the group board interface in response (and vice versa).

Similarly, when a user performed a search on one of the interfaces, both group board content and group messaging content is searched so that the user can switch between the interfaces and see two sets of search results pertaining to their one search, thereby maintaining the same context across the board and messaging interfaces.

In a first embodiment, in response to a scroll or search input, display data of each of the two interfaces is updated simultaneously - irrespective of which interface is currently being displayed - to scroll though that interface or restrict that interface to an appropriate set of search results, allowing a completely seamless switching between the two interfaces. That is, both sets of display data are updates simultaneously in response to the same scroll input of the same search input.

In a second embodiment, a similar effect is achieved - that is both sets of display data are updated based on the same scroll input of the same search input, but the display data for the interface that is not currently being displayed is only updated in response to the mode switch instruction that switches to that interface.

That is, the first and second embodiments differ with respect to the time at which the display data is updated - but the eventual outcome is the same.

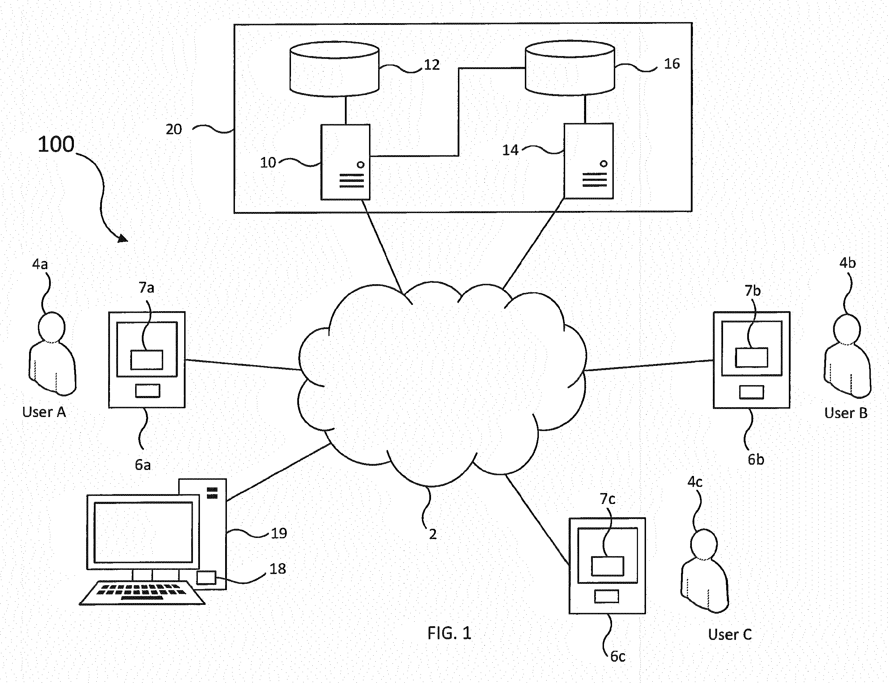

Figure 1 shows a communication system 100, in which a first user 4a (User A) is associated with a user terminal 6a, a second user 4b (User B) is associated with a user terminal 6b, and a third user 4c (User C) is associated with a user terminal 6c. The user terminals 6a, 6b, 6c are mobile devices, such as phones (smartphones) or tablet devices.

The mobile devices 6a, 6b, 6c are connected to a communications network 2, and can communicate with one another over the communication network 2, thereby enabling the users 4a, 4b, 4c to communicate with each other over the communication network 2. The communication network 2 may be any suitable network which has the ability to provide a communication channel between the mobile devices. For example, the communication network 2 may be the Internet or another type of network such as a High data rate mobile network, such as a 3rd generation ("3G") mobile network, or another type of packet-based network.

Mobile devices 6a, 6b and 6c each execute a respective instance of the HiveOut application mentioned above, denoted 7a, 7b, 7c respectively. The HiveOut application is provided by a software provider associated with the communication system 100. The HiveOut application is a software program executed on a local processor of the respective mobile device. The HiveOut application performs the processing required at the respective mobile device in order for the mobile device to transmit and receive data over the communication system 100.

As noted, the HiveOut application is a combined group messaging and group board application. It provides a sharing and collaboration platform, whereby users can share content and collaborate over the shared content via the board interface - for example by editing a file together; voting in a poll; maintaining a checklist etc. That is, group messaging and content sharing and collaboration (specifically group board) functionality are integrated in a single application, whereby a single application provides both group messaging and group board communications modalities.

The group messaging functionality enables users to chat with one another in a common thread, by each user instigating the transmission of new messages in response to earlier messages received from other users in the group in a group messaging exchange conducted between the group. Moreover, whenever content is shared or updated on the board, a selectable system notification (that can be selected to take users to the updated/added item on the board interface) is displayed on the messaging interface (which thus shows complete activity history of the group).

The group board functionality enables users to share more substantial or important content with one another, via the group board. The group board is a summary of the group's activities and shared content deemed important by the group - it makes items of interest and decision making immediately available, and also enables collaboration between the users in the group to, for example, edit a file together; vote in a poll; maintain a checklist etc. Group board items may for example comprise or identify: links (e.g. URIs/URLs); photos or other images; documents; spreadsheets; generic files, such as PowerPoints, PDFs etc.

In the present example, the users 4a, 4b, 4c form a group of users and share data items with one another via their respective instances of the HiveOut application 7a, 7b, 7c. The users can operate their respective HiveOut applications in either a group messaging mode or a group board mode. Each item that is shared via either of these modalities is a group data object. The group data objects are computer-implemented data structures specific to the HiveOut application, and function as a wrapper for both group messaging and group board content. Each group data object comprises an indication of user group (group indicator) - allowing a common data structure to be used for both modalities - and a separate indication of modality (modality indicator).

In the group messaging modality, users may share group messaging modality data objects (that is group data objects whose modality indicator denotes the group messaging modality) with other users in the group. Each messaging modality data object comprises group messaging content similar to conventional group instant messages. This content is displayed as a sequence of messages on a group messaging display interface, where, for example, each message is represented as an image, and each image is ordered according to some criterion (e.g. time, category, group board content - discussed later in more detail) such that the messages form a sequence. For example, they may be ordered primarily by time with (in some cases) secondary ordering by some other criteria or criterion.

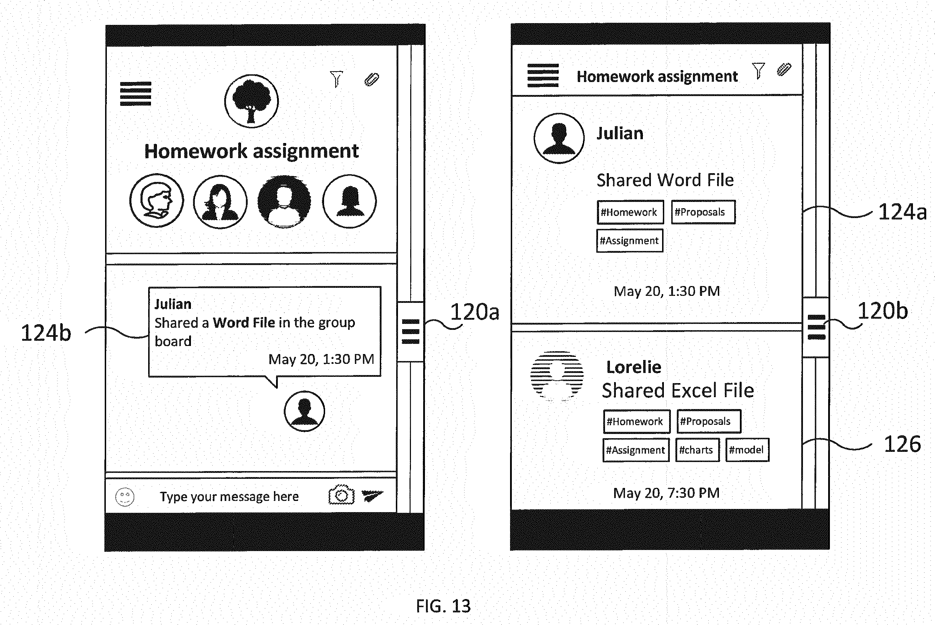

In the group board modality, users may share group board modality data objects (that is, group data objects whose modality indicator denotes the group board modality) with other users in the group. In the following examples, the group board modality data objects comprise more substantive content, such as, for example: links, photos, video files, audio files, polls, invites (e.g. to an event), checklists, documents etc. This content is displayed as a collection of items posted on a group board display interface. For example, each item may be represented by an image, and each image may provide the user with a means of accessing (e.g. downloading) the associated content to their mobile device within the HiveOut app itself, at least in some cases, such that the shared content is displayed via the UI of the HiveOut app itself. The posted items are also ordered - by time in the examples below. By way of example, figure 13 shows the group board display interface as a vertically scrollable timeline of content added by users in an exemplary "Homework assignment" group.

For both modalities, each group data object includes a group indicator, e.g. a conversation identifier (ID) or a set of user identifiers of users A, B and C etc., and a modality indicator, i.e. an indication of the modality that was used to share the group data object with the users in the group. The group indicator and modality indicator enable the HiveOut application of each user to access and display the group data objects associated with a selected group of users. Each time a user (e.g. user A) shares new board content with users in a selected group or edits existing board content, the HiveOut application generates a new group data object and transmits the group data object to the other users in the group (e.g. users B and C). Only certain types of group board data objects are editable.

The user inputs received at the mobile device that result in the said sharing are herein referred to as "content generation inputs" and may include user inputs received by input devices such as mice, keyboards, remote controls, and the like. Alternatively or additionally, the content generation inputs may be received through a natural user interface (NUI). Examples of NUI methods include those utilizing touch sensitive displays, voice and speech recognition, intention and goal understanding, motion gesture detection using depth cameras (such as stereoscopic or time-of-flight camera systems, infrared camera systems, RGB camera systems and combinations of these), motion gesture detection using accelerometers/gyroscopes, facial recognition, 3D displays, head, eye, and gaze tracking, immersive augmented reality and virtual reality systems etc.

Figure 1 also shows a back end system 20 connected to the communication network 2. The back end system 20 comprises a dual-modality server 10 and an interoperability server 14, the functionality of which will be described in due course.

The dual-modality server 10 ("HiveOut server") enables the mobile devices 6a, 6b, 6c to access a first data store 12, where group data objects are stored by the HiveOut server 10. These group data objects include any group messaging content and/or group board content that has been shared between users A, B and C, via their respective HiveOut applications. This is the mechanism by which data objects are exchanged between the different instances of the HiveOut application 7a, 7b, 7c. That is, data objects are exchanged between the HiveOut instances 7a, 7b, 7c running on the mobile devices 6a, 6b, 6c via the HiveOut server 10: for example, when the first user 4a sends a message or posts an item to the board, its content is transmitted to the dual-modality server 10 in a data object denoting either the group messaging or group board modality respectively, and stored in the first data store 12 so that it becomes available to the other users 4b, 4c via their HiveOut instances 7b, 7c. The HiveOut server 10 may for example push received data objects to the other HiveOut instances via the network 2, or a notification allowing them to be downloaded. The data objects are retained in the first data store 12, so that historical messages and board content can be accessed at any time using the HiveOut app.

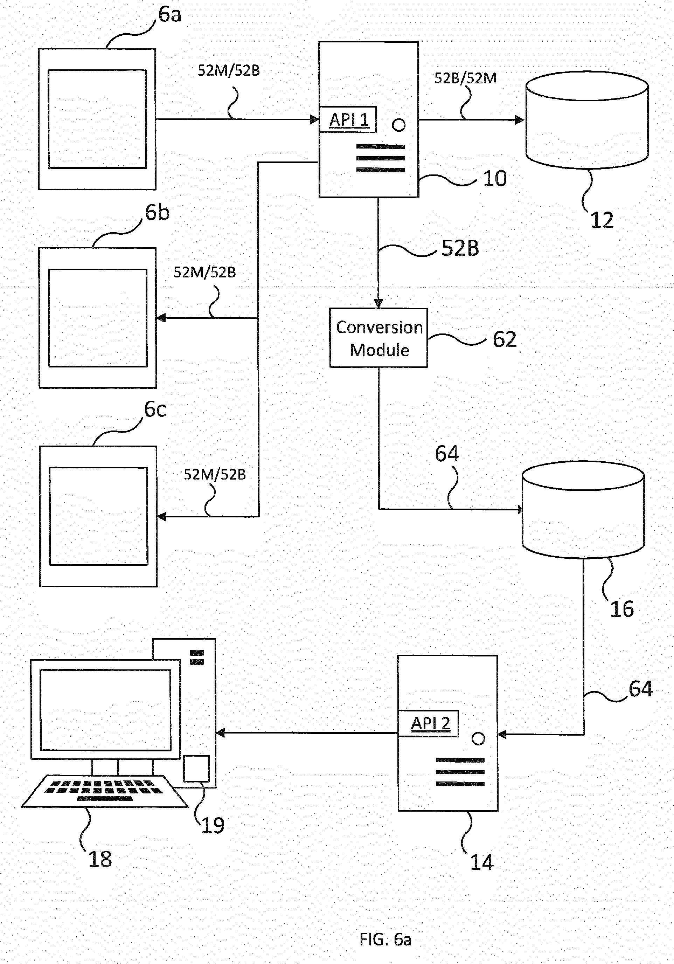

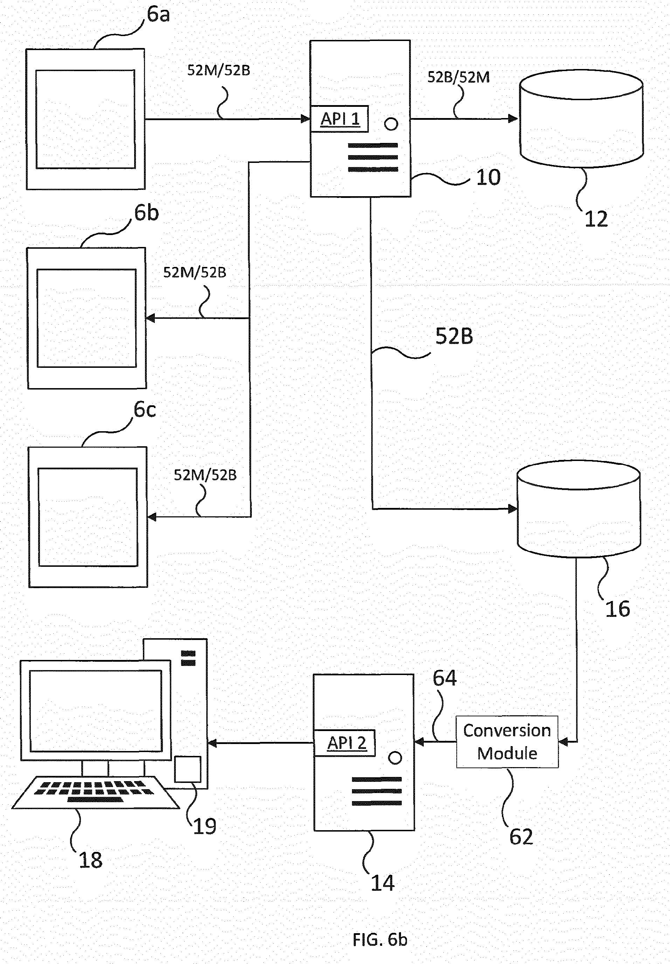

The different application 19 may for example, be a dedicated content-sharing application such as SharePoint or OneNote application, or a Web browser via which e.g. SharePoint or OneNote services can be accessed. This is described later, in relation to figures 6A and 6B.

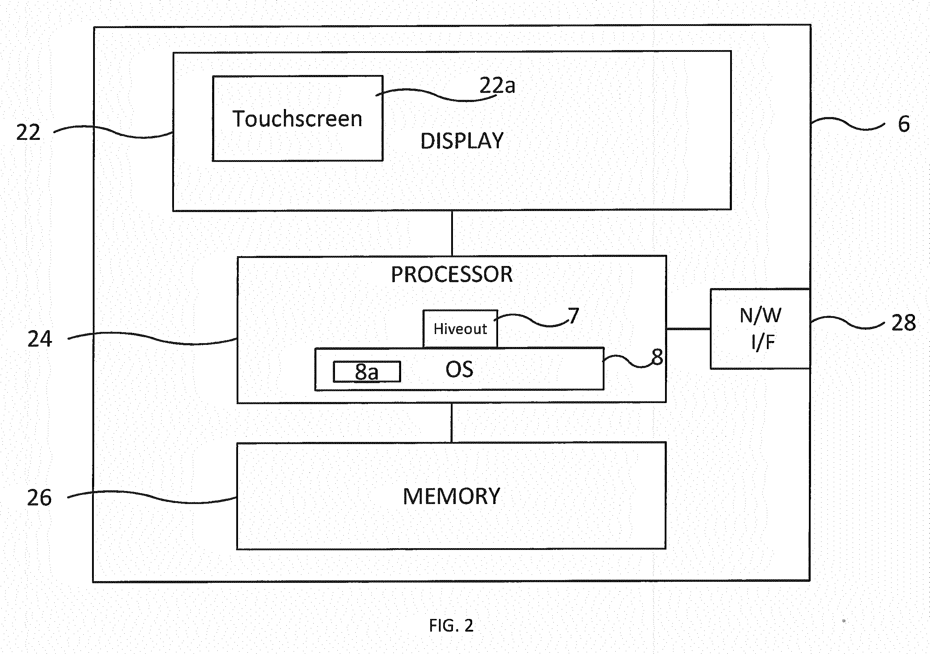

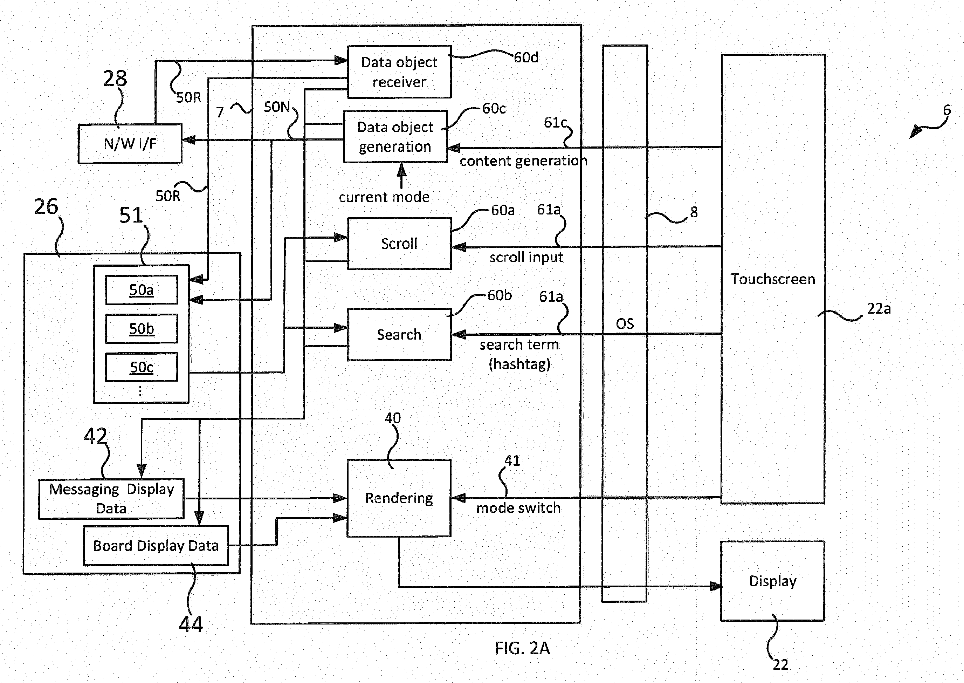

Figure 2 shows a block diagram of a mobile device 6 (e.g. 6a, 6b, 6c). The mobile device 6 comprises a processor 24 to which is connected a memory 26, input apparatus (not shown), output apparatus, and a network interface 28 such as an Ethernet, Wi-Fi or mobile network (e.g. 3G, LTE etc.) interface which enables the user device 6 to connect to the network 2. The output apparatus comprises a display 22 having a total display area. Any of the various components shown connected to the processor may be integrated in the user device 6, or non-integrated and connected to the processor 24 via a suitable external interface (wired e.g. Ethernet, USB, FireWire etc. or wireless e.g. Wi-Fi, Bluetooth, NFC etc.). The input apparatus comprises a touchscreen 22a of the display 22 in this example, in the manner of a conventional smartphone or tablet.

The memory 26 holds a copy of the HiveOut application 7 which, when executed on the processor 24, causes the user device 6 to implement the functionality of the HiveOut application 7. The processor 24 is shown executing an operating system (OS) 8, which is a mobile operating system such as Windows Phone, Android, iOS, Windows 10 (a recently developed cross-platform OS) etc. The HiveOut application 7 runs on top of the OS 8.

Many mobile OSs provide an application selection interface on the display 22, on which each application installed on the mobile device 6 is represented as a respective icon, e.g. in an array of application icons. In this case, the HiveOut app 7 is represented as a single icon on the application selection interface of the OS 8, as it is a single application.

For many modern mobile OSs (e.g. Windows, Android, iOS), a software provider of that OS provides a dedicated application distribution mechanism, often referred to as an "app store" for that OS. A portion of the code of the OS itself, or application code that is distributed with the OS itself, provides an interface to the app store. Within the app store of the OS 8, the HiveOut app 7 is distributed and managed as a single application, e.g. having a single version number that is updated as the application is updated, that is only downloadable as a single package in a single download etc.

The OS 8 comprises a scheduler 8a, which allocates resources (i.e. clock cycles) of the processor 24 to any application(s) running on the OS 8, including the HiveOut app 7. The scheduler 8a distinguishes between different applications running on the OS 8. An instance of a computer program running on the OS 8 is referred to in the art as a process. The HiveOut app may in some cases be run as a single process that is distinguished from any other processes running on the OS by the scheduler 8a, for example the scheduler 8a may assign different process IDs and/or different application IDs to different processes. Alternatively the HiveOut app 7 may be run as multiple processes - however, in this case the processes are still identified by the scheduler 8a as belonging to the same application. For example, the scheduler 8a may assignee the same application ID to each process of the HiveOut app 7. These processes are distinguished by the scheduler 8a from processes of other applications, for example by the scheduler 8a assigning the other processes a different application ID(s).

Modern OS schedulers distinguish between foreground and background applications running on the OS. The terms "background" and "foreground" in the context of application scheduling by an operating system scheduler are well known in the art, for example in relation to the scheduling of application threads and/or processes. Some, though not all, mobile OSs only allow a single foreground application at any one time. The UI of the foreground application will generally occupy substantially all of the total display area of the display, though the OS 8 itself may from time to time display notification, selectable options etc. In this case, when the HiveOut application 7 is the active application, the process or processes managed as foreground application processes by the scheduler 8a will be that or those of the HiveOut application 7. Some mobile OSs may allow other applications to run in the background simultaneously with the HiveOut app 7 - but their process(es) will be managed by the scheduler 8a as background processes.

### HiveOut UI

The HiveOut app keeps group conversations structured and contextual for users, while they seamlessly work with content. As indicated above, each group in HiveOut has the two main pivots - the group messaging interface for that group and the group board interface for that group. The group can chat with each other on a common thread, via the group messaging interface. The group chat and board are tightly coupled in HiveOut to facilitate group collaboration and communication. The coupling of group chat with a group board is a novel feature that no existing application provide.

The group board interface makes items of interest and decision making immediately available. The group can promote content from the group messaging interface to the group board or post directly to it. Content can also be auto-promoted to the group board interface based on its popularity or relevance.

The group board interface exists alongside the group messaging interface, on the same timeline. The group board interface accepts a wide variety of pre-defined data object types - such as checklist, poll, event, docs, photos etc. It is straightforward to look up and discover content, through entity (e.g. user) and hashtag filters. It is accessible from anywhere, and can be archived and/or exported as well.

Items on the board are represented as widgets, such as action and/or information widgets. Content can be marked as important; and the board can be filtered to view important items only. Sub-groups can filter the board to view content posted by them.

Users can add multiple hashtags to indicate theme(s) that their message or board item fits into. When adding a hashtag, a user can quickly view a list of hashtags already in use in the conversation, and preferably reuse the same hashtag unless she wants to initiate a new theme or work-item to discuss. The group conversation can be filtered on hashtags, and also on individual users.

Figure 2A is a functional block diagram showing certain software modules 40, 60a, 60b, 60c, 60d of the HiveOut app 7. Each represents a respective part of the HiveOut app's functionality that is implemented by executing the HiveOut app 7 on the processor 24 of the mobile device 6. In particular, a rendering module 40, a scrolling module 60a, a searching module 60b, a data object generation module 60c, and a data object receiving module 60d of the HiveOut app 7 are shown.

A plurality of group board data objects 51, including individual data objects 50a, 50b, 50c are shown stored in the memory 26. Each may have been transmitted from the mobile device 6 to the HiveOut server 10 or received from the HiveOut server 10. Each may contain either group board content to be displayed on the group board interface, or group messaging content to be displayed on the group messaging interface - a denoted by its modality indicator.

The memory 26 also holds:
- group messaging display data 42 for displaying the group messaging interface, and:
   ∘ at least some of the content of any group messaging data objects of the plurality of data objects 51 on the displayed group messaging interface, and
   ∘ system notifications denoting new or updated group board content, that are also displayed on the group messaging interface; and
- group board display data 44 for displaying the group board interface, and at least some of the content of any group board data objects of the plurality of data objects 51 on the displayed group messaging interface.

Each of the group messaging display data 42 and the group board display data 44 has sufficient information content such that it could be used to display the group messaging interface and the group board interface respectively. In some embodiments, both sets of display data 42, 44 are retained in the memory 26; that is, both display interfaces remain fully defined in the memory by the display data 42, 44 even when only one is being displayed. Most of the time only one interface is displayed - the only time parts of both interfaces may be displayed is during a transition effect rendered to represent a mode switch.

The group messaging display data 42 comprises group messaging display data for the group messaging interface and/or one or more display parameters for the group board display interface. The group board display data 44 comprises group board image data for the group board interface and/or one or more display parameters for the group board interface.

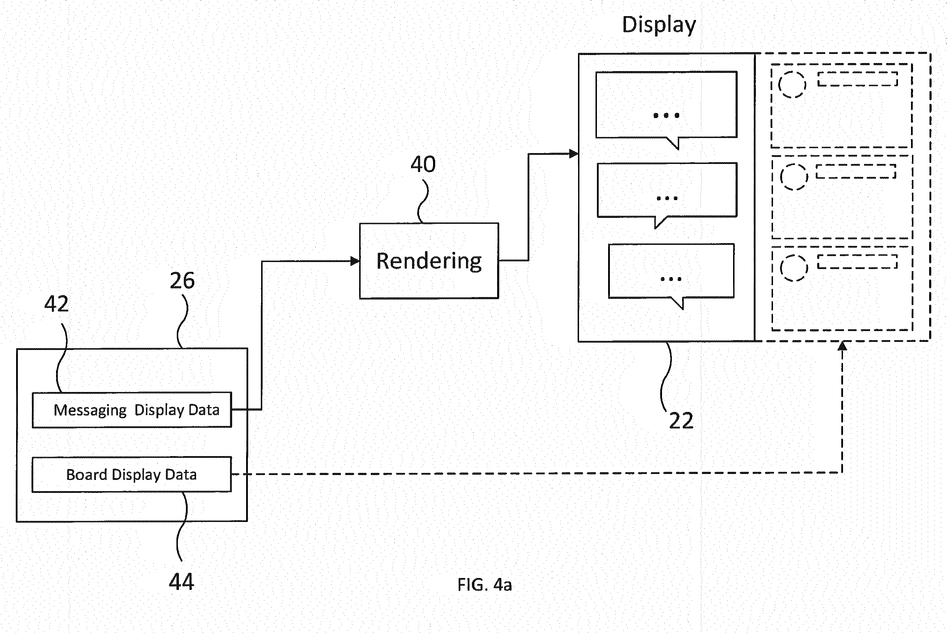

The rendering module 40 is configured to use the messaging display data 42 to display the group messaging interface and the group messaging content as a time-ordered sequence of messages thereon, and to use the group board display data 44 to display the group board interface and the group board content as a time-ordered collection of posted items thereon. When transitioning between the interfaces, both display data 42, 44 may be used - as described below in relation to figures 4a-4c.

The HiveOut app 7 interacts with the display 22 and touchscreen 22a hardware of the mobile device 6 via the OS 8. A user of the mobile device 6 can instigate a mode switch instruction 41 to switch, say, from the group messaging interface to the group board interface using the touchscreen 22a, for example by making a single swipe gesture, such as a horizontal swipe, to swipe between the interfaces, which is convenient for him as it requires minimal interaction with the device 6. The rendering module 40 responds to the mode switch instruction 41 by switching between the interfaces according to the mode switch instruction 41.

The user can input a search term 60b, such as a hash tag, using the touchscreen 22a. For example, by entering the search term into a search term field displayed on the group messaging interface or group board interface, using a keyboard displayed on the display 22. The searching module 60b receives the search term, and is configured to use it to search the plurality of data objects 51 for any data objects matching the search term - note that both modalities of data object are searches using the search term 61a, regardless of which interface the search term is inputted to. Thus, for example, a search term 61a entered in the group messaging mode can also be used by the searching module 60b to search group board data objects. The search module 61b is configured to update both the group messaging display data 42 and the group board display data 44 based on the search, so that the group messaging display data 42 can be used to display group messages matching the search term and so that the group board display data 44 can be used to display posted items matching the search term 61a. In the first embodiment, both sets of display data 42 and 44 are updated simultaneously; in the second embodiment, the display data for the interface that is not currently being displayed is only updated in response to the mode switch instruction 41 - note that in both embodiments, a single search term 61a is used to update both sets of display data 42, 44 (the difference being the time at which the updates occur).

The user can also instigate a scroll input 61a, such as a vertical swipe gesture, using the touchscreen 22a. The scrolling module 61a responds to the scroll input, by updating the messaging display data 42 and the board display data 44 based on the scroll input and the plurality of data objects 51. The scroll input defines a timing relative to the time-ordered sequence of messages (when received in the group messaging mode) or a timing relative to the time-ordered collection of posted items (when received in the group board mode) - the scroll module 60b is configured to update both the message display data 42 and the group board display data 44 so that the former can be used to display messages corresponding to that timing and the latter can be used to display posted items corresponding to that timing. That is, irrespective of which mode the scroll input was received in, it can be used by the scrolling module 60a to scroll though both interfaces. In the first embodiment, both sets of display data 42, 44 are updated simultaneously based on the scroll input; in the second embodiment, the display data for the interface not currently being displayed is only updated in response to the mode switch instruction 41. Note that a mode switch instruction 41 may in some cases also be instigated automatically, by the HiveOut app 7 itself.

The user can generate massaging or board content by inputting content generation input 61c in the group messaging mode (when the group messaging interface is being displayed) or the group board mode (when the group board interface is being displayed) respectively using the touchscreens 22a. The data object generation module 60c responds to the content generation inputs, and determines the current mode of the HiveOut application (group messaging or group board). Based on the content generation inputs 61c, the data object generation module 60c generates a new group data objects 50N and sets its modality indicator to denote the group messaging or group board modality, depending on the current mode. The new group data object 50N is transmitted to the HiveOut server 10 via the network interface 28 for transmission to other users in the group, and a copy is also stored in the local memory 26 so that it can be displayed locally as a transmitted message or posted item, depending on its modality. The data object generation module 60 can also update the group messaging display data 42 or the group board display data 44 so that it can be used to display the new content as a new message or new posted item, depending on its modality.

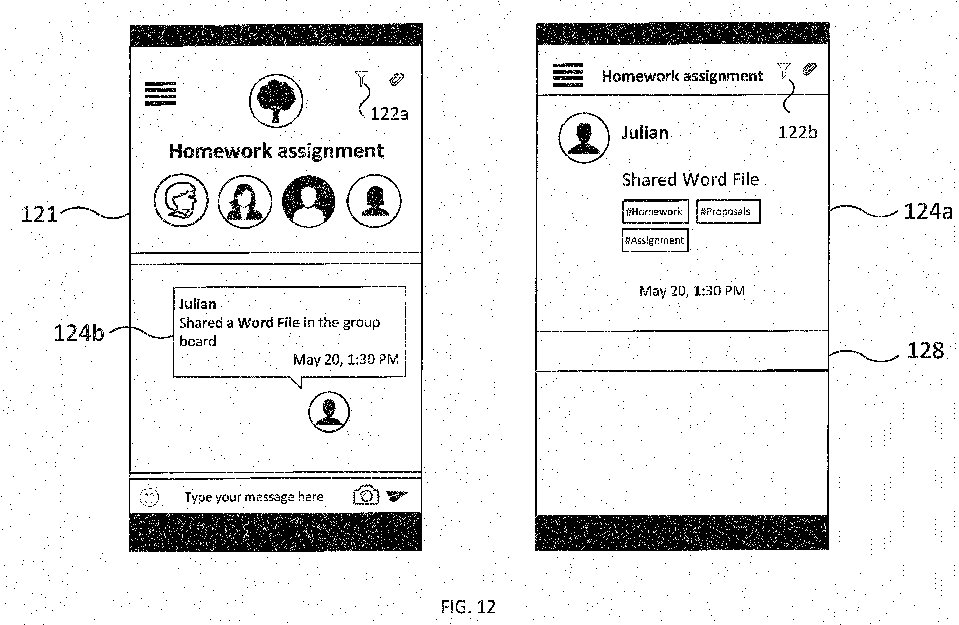

Any data object 50R received from the HiveOut Server 10 is processed by the data object receiving module 60d. The receiving module 60d stored the received data object 50R in the memory 26, reads its modality indicator and updates: the messaging display data 42 to display its content as a new message if its modality is group messaging, and the group board display data 44 to display its content as a new posted item 42 if its modality is group board. Where the modality is group board, the receiving module 60d may also update the group messaging display data to display a notification of the new board item on the group messaging interface (124b, figure 12) - and vice versa.

Figures 4A - 4C illustrate three different stages of a process that is used to control the manner in which group data objects are displayed to a user of the HiveOut application 7. Message display data 42 and board display data 44, for rendering the group messaging interface and the group board display interface respectively, are stored in the memory 26 of the mobile device 6. For example the display data 42, 44 may comprise one or more display parameters according to which the relevant content is displayed, image data so that the content can be rendered to have the appearance of a message or posted item etc.

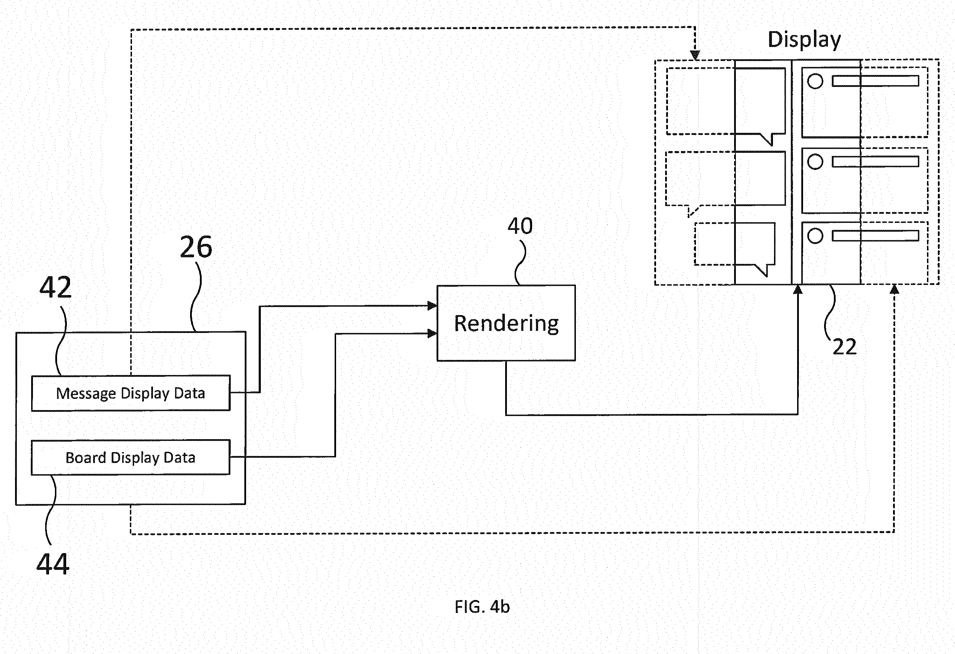

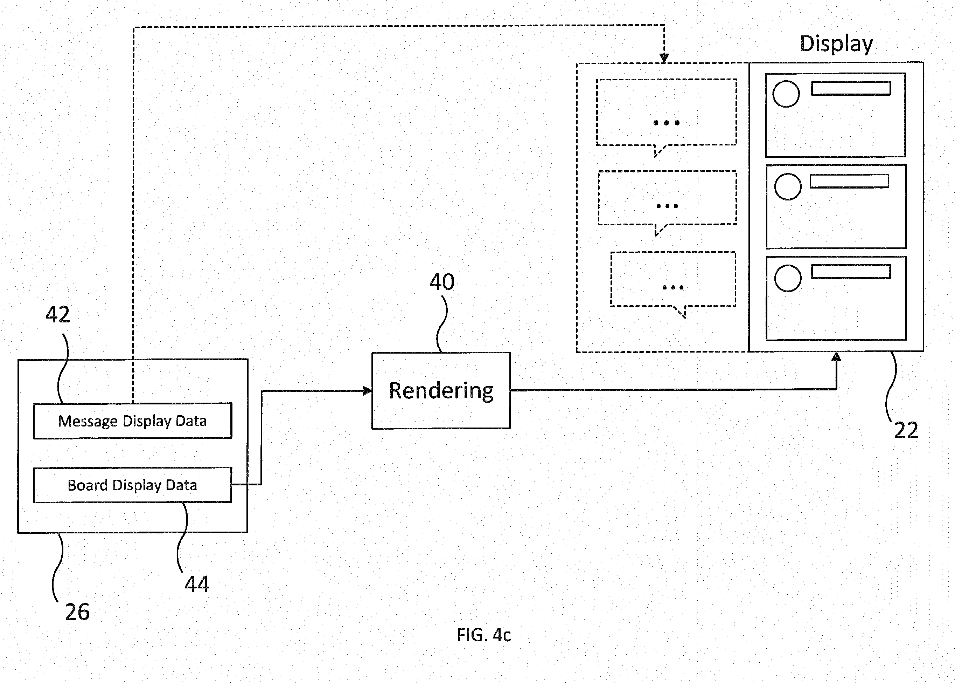

A rendering module 40 of the HiveOut application 7 uses the message display data 42 and/or the board display data 44 to control the display 22 of the mobile device 6 to display the group messaging interface (figure 4a), the group board interface (figure 4C) or, briefly, a combination of both to render a mode switch animation effect (figure 4B). The rendering module 40 represents part of the functionality implemented by executing the HiveOut application on the processor 24.

In other words, the group messaging display data 42 and the group board display data 44 define the group messaging and group board interfaces respectively, allowing either to be displayed on the display 22.

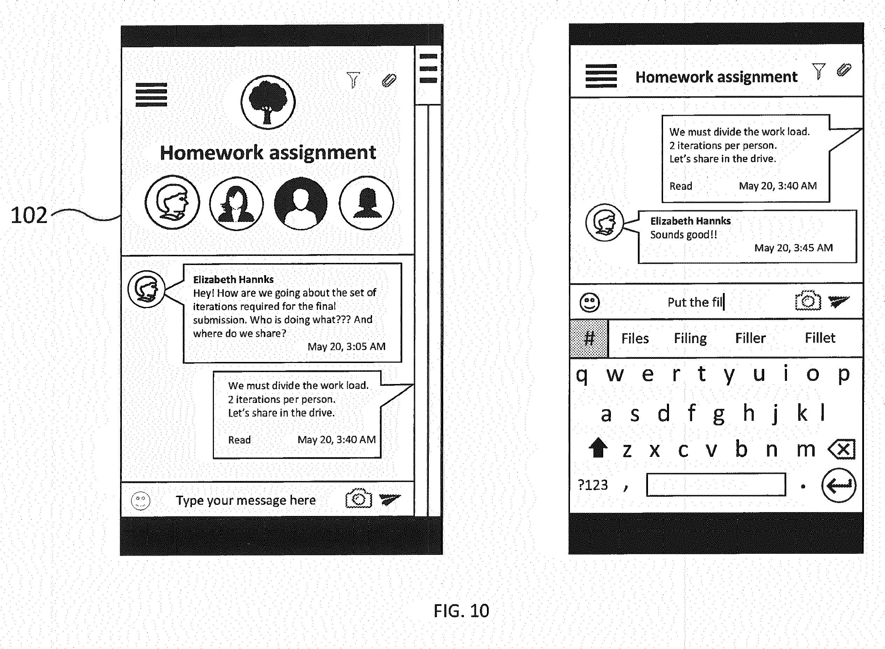

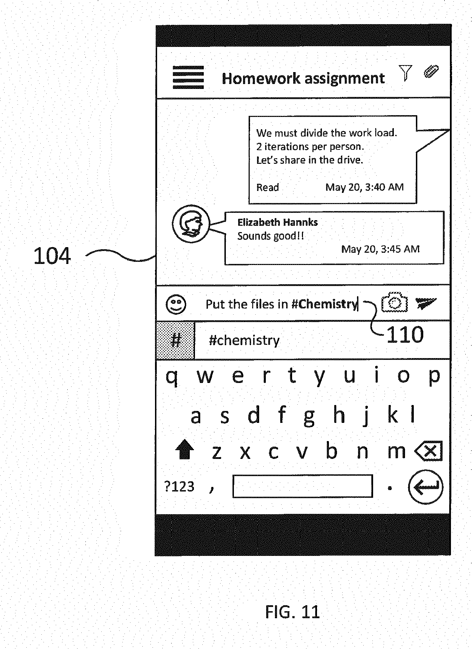

Figure 4A illustrates the HiveOut UI when operating in the group messaging mode. The rendering module 40 uses the messaging display data 42 to display the group messaging interface on the display 22. For example, the rendering module 40 may use the messaging display data 42 to display transmitted and/or received messages as a series of images on the group messaging display interface. This is shown, for example, in figures 10 and 11. The group board display interface is shown with a dashed outline to indicate this interface (and its associated content) is not currently being displayed at the display of the mobile device, but is nonetheless defined by the group board display data 44 such that it could be displayed in the manner illustrated.

Figure 4B illustrates the HiveOut UI at a moment in time shortly after the user has navigated away from the group messaging mode to the group board mode, by performing a mode switch instruction (discussed later). In such a situation, both the message display data 42 and board display data 44 are used by the rendering module 40 and processed to control the display to render a transition effect, whereby the group messaging interface is dynamically replaced by the group board interface. As in figure 4A, the dashed lines indicate content that is not currently being displayed at the mobile device's display, thus it can be seen that part of each interface is being displayed at this moment in time.

Figure 4C illustrates the HiveOut UI when it has fully transitioned to the group board mode. The board display data 44 is used by the rendering module 40 to control the display 22 to display the group board display interface. The messaging display interface is shown with a dashed outline to indicate that this interface (and its associated content) is not currently being displayed at the display of the mobile device.

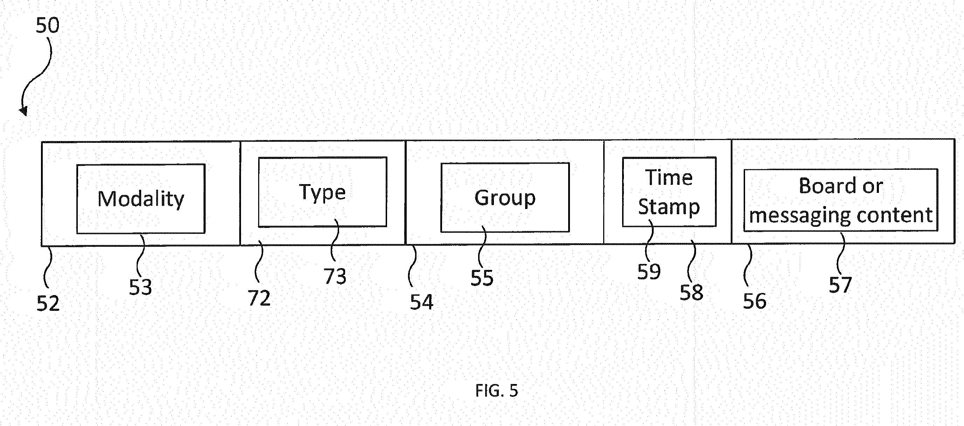

Figure 5 illustrates an example structure of a group data object. In figure 5, each group data object has a modality indicator field 52, in which a modality indicator 53 is held. The modality indicator 53 indicates the mode used by the user to share the group data object with the other members of a selected group. That is, the mode in which the content generation inputs were received at the mobile device in order to share the content. The modality indicator 53 is in the form of one of more flag bits. For example a single flag bit can be used to distinguish between group messaging and group board content, which uses minimal overhead.

The group data object 50 also has a group indicator field 54 in which the group indicator 55 is held. The group indicator 55 is used to identify a specific group of users that are able to receive the group data object. A single user may belong to a plurality of different groups. For example, in relation to figure 1, users A, B and C may belong to a first group of users and be associated with a first group indicator. Another group of users, containing the same, a subset of and/or different a set of users may be distinguished from the first user group by a different group indicator. The group indicator 55 enables the board or messaging content associated with the group data object to be identified as being associated with a specific group of users.

The group data object 50 also has a content field 56, in which the board or messaging content 57 is held. The messaging content comprises the group messaging content that was shared by one of the users in the group identified by the group indicator. Board content may include, but is not limited to, user polls, documents created using e.g. Microsoft Office, or Apple's iWork, multimedia files such as: images, videos and recordings etc. The board or messaging content may be in a format that requires conversion before it can be viewed on a particular device or version of the HiveOut application.

The group data object 50 also has a time field, in which a timestamp denoting a timing associated with the content 57 is held. For example a time of its generation or transmission, or a time of its receipt that is added upon receipt at the mobile device 6, and which may also indicate e.g. an additional time(s) at which it has been updated or modified.

The group data object 50 also has a type field 72, separate from the modality field, for holding a type indicator 73 denoting a type of the content 57. For example, for data objects of the group board modality, the type may be a checklist type, a poll type, a (generic) file type, a photo or camera type, and a calendar invite type.

The content of a poll type item comprises a poll question; at least two choices, optionally limited by a maximum number of choices (e.g. 5); optionally an expiry date; a current tally of votes per choice; and an indication of users in the group who have not voted. For a poll type data object, a notification is added on the messaging interface when a poll is created, when someone votes, or someone changes their vote. Poll type objects are cached offline at the user device 6.

The content of a photo/camera type data object comprises one or more images, e.g. photos, allow adding multiple photos to be posted simultaneously. The HiveOut application provides a light-weight image viewer interface, via which these can be viewed. All photos on the group-board can be viewed sequentially via the image viewer interface. A notification is displayed on the group messaging interface when a photo(s) is posted on the group board.

The content of a calendar type data object comprises event details, for example specifying an event date, and optionally an event time and/or venue. An event is treated as an all-day event by default. When displayed on the group board interface, the date and time is displayed as is a countdown to the event (e.g. in days and/or hours etc.). The displayed calendar invite object is selectable to open a separate calendar application, to which the event details are provided automatically. A notification is provided on the group messaging interface when a calendar invite is posted to the group board interface, and when it is updated e.g. to change the event time or venue. Calendar type objects are cached locally at the user device 6.

The content of a link type data object comprises a link to an addressable memory location at which content is held, e.g. Web content accessible via a Web server. A preview copy of the Web content may be cached locally at the user device 6, so that it can be viewed offline. When displayed on the group board interface, the page preview, a page title and the link itself are displayed on the group board interface. The content can be viewed via a separate browser application, which is opened when the displayed link is selected and to which the link is provided automatically. A notification is displayed on the messaging interface when a new link is posted to the board.

The content of a generic file type data object comprises a file, such as a Word document, PDF, PowerPoint document etc., or a link to an addressable memory location where the file is stored (e.g. accessible via the HiveOut server or a separate content server). A preview of the file is displayed on the group board interface where possible, which can be selected to open the file it in a default handler application specified within the OS 8. If only a link is included, the file is downloaded in response to the user selecting the preview. A notification is displayed on the group messaging interface when a file is added or modified.

The content of a checklist type data object comprised a list of element(s) (at least one) in plaintext format, and marker data for each element denoting whether or not that element is complete. When displayed, the elements are displayed as a list. For each element, an option is displayed to mark the element as complete or incomplete (e.g. if it was wrongly marked as complete). A notification is displayed on the group messaging interface whenever a new list is posted, and whenever an element of a list is marked as complete or incomplete. A local copy of the list is cached at the user device 6 for offline use.

For data objects of the group messaging modality, the type field may for example indicate whether the content is a sent message (i.e. generated locally by the user) or a received message (i.e. generated remotely by one of the other users).

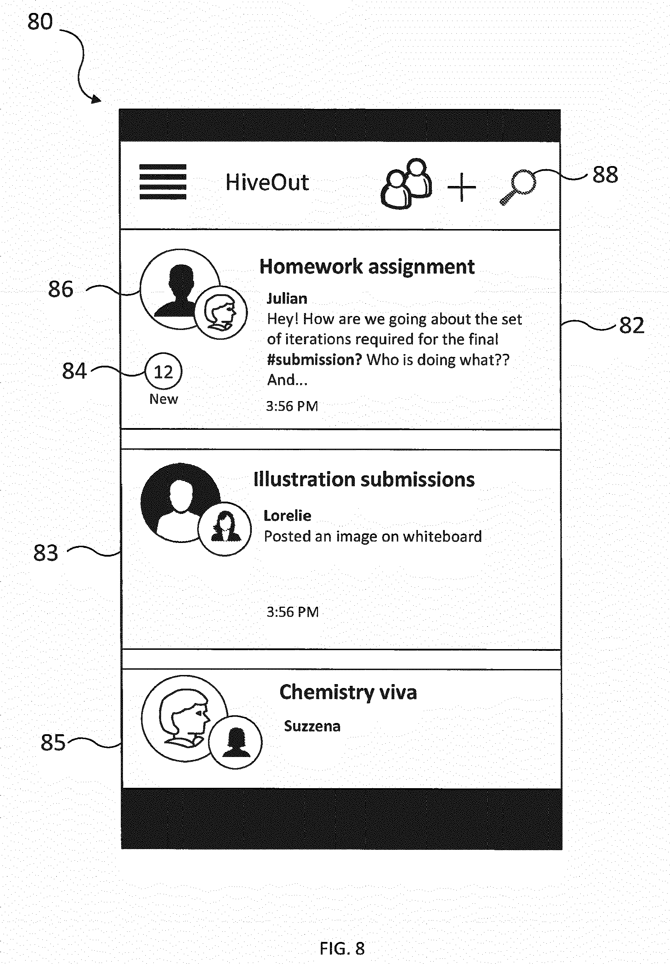

Figures 8 to 14 show the UI of the HiveOut application 7 at various stages.

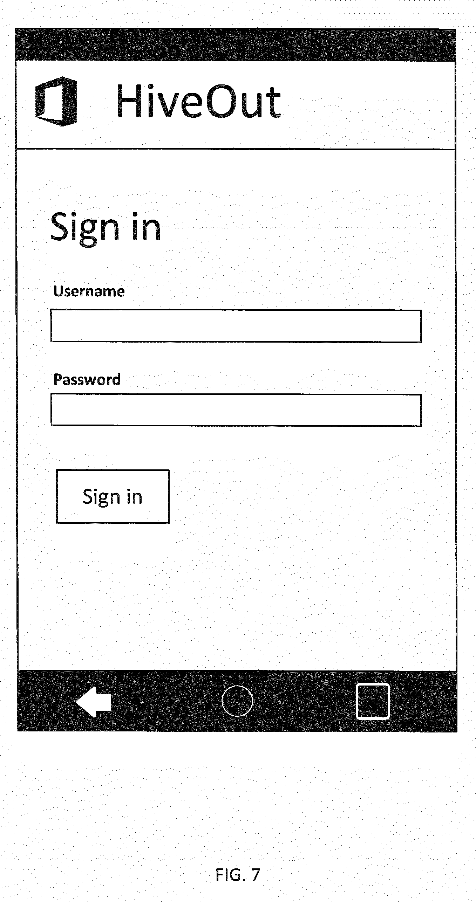

Figure 7 shows a log-in interface, by which a user can log in to the HiveOut application. For example, a user may be able to login using an existing account provided by another platform, such as an email or social media account, or a generic account such as a Microsoft "Office 365" account. An Office 365 account may be specific to a particular organization, such as an employer (work account).

Figure 8 illustrates an example group selection display interface 80 (herein referred to as a "group page view") that a user is presented with upon logging in to the HiveOut application, via the log-in interface shown in figure 7. The emphasis of the group selection interface 80 is on group activity versus simply latest messages. That is, groups are ordered to place those with the most recent activity first (not just those with the most recent messages), whereby recent activity such as a group user voting in a poll, collaborative editing of a shared file on the group board, or an update to a checklist can cause groups to be promoted on the group selection interface 80.

The group page view displays a set of active groups that the user is part of. For example, in figure 8, the user is a member of the groups "Homework assignment", "Illustration submissions" and "Chemistry viva". Each group in the group page view is represented as a respective image, herein referred to as a "flash card", with information relating the group displayed on each flash card. Each flash card may display an indication of messaging or board content that has been recently added to each group. The flash cards are ordered according to how recently new items (messages or board items) have been added to the corresponding groups.

Users can belong to two types of groups: 'ad-hoc' groups - created by general users of the "HiveOut" application - and 'official' groups - created by e.g. organizations, which also regulate which users can be members. The group page view displays official groups differently to ad-hoc groups, for example, to indicate that a user has limited control over the membership of these groups, and the content that is posted to them.

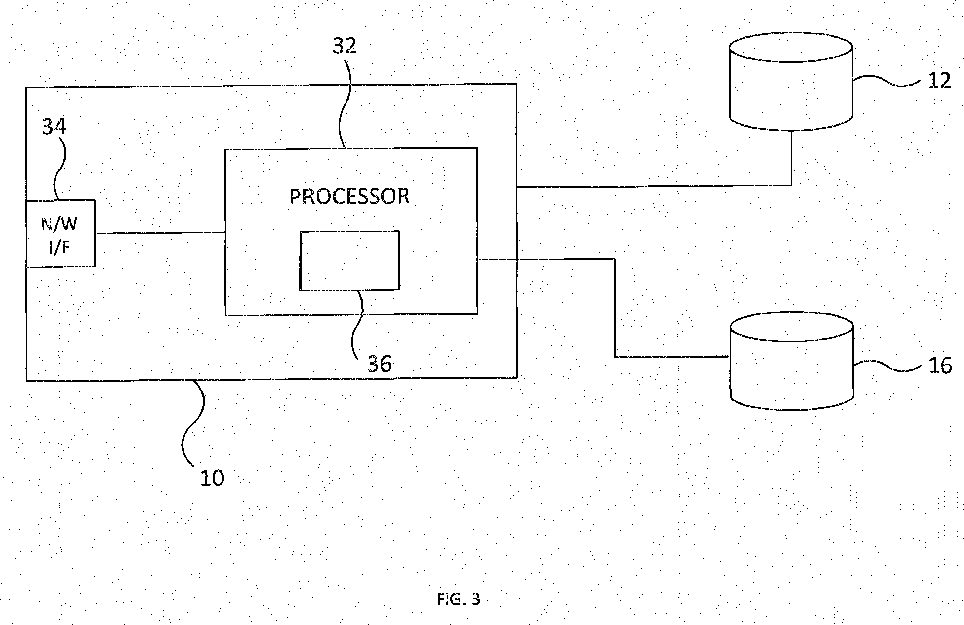

The user may select a group within the group page view so as to view the messaging and/or board content associated with that group. The user selects a group by providing a user input to select the corresponding flash card e.g. by touching the touchscreen of their mobile device, or any of the other types of user inputs described earlier (e.g. inputs received at a NUI). It will be appreciated that, whilst only three groups are shown in figure 3, the user may belong to fewer or more than three groups.

For example, in figure 8, the flash card associated with the "Homework assignment" group shows that a user, Julian, has posted a new message to the group. The flash card shows a preview of the message and an indication of the time at which it was posted to the group (3 :56 PM). The flash card also shows an enlarged version of a profile picture associated with Julian 86, so that users viewing the group page can more readily identify Julian as the user that most recently posted an item to the group. A second, smaller, profile picture may also be displayed next to the profile picture 86, to indicate another user that has also recently (but less recently than Julian) posted an item to the group.

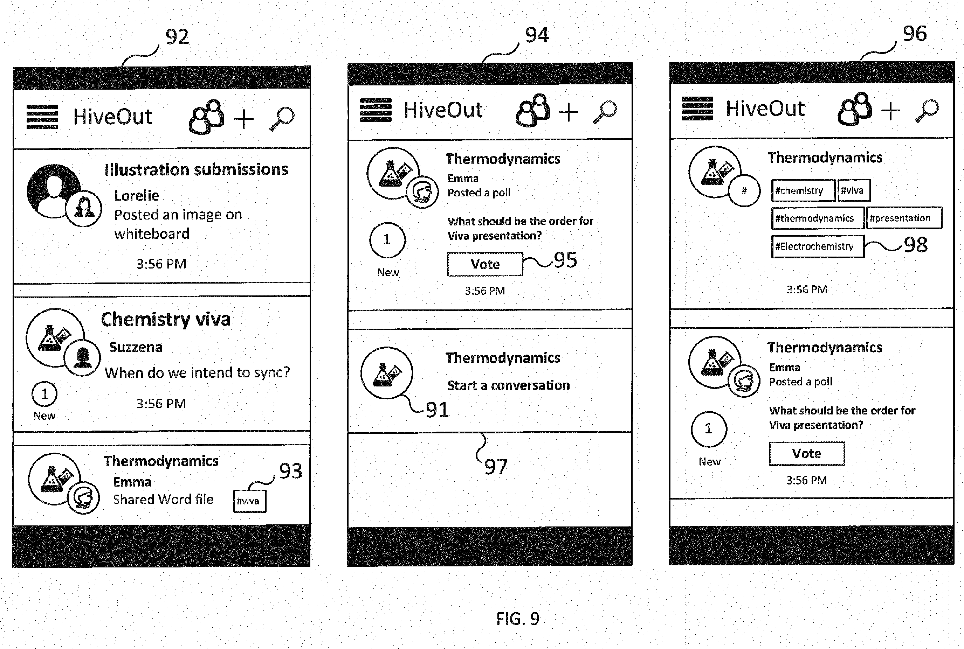

Alternatively, the first, larger profile picture may show a more generic image associated with the group - e.g. an image selected by a group administrator. For example, the larger image for the "Chemistry viva" and "Thermodynamics" groups in figure 9 is an image of laboratory equipment 91. The second, smaller image may correspond to the profile picture of the last active user within the group.

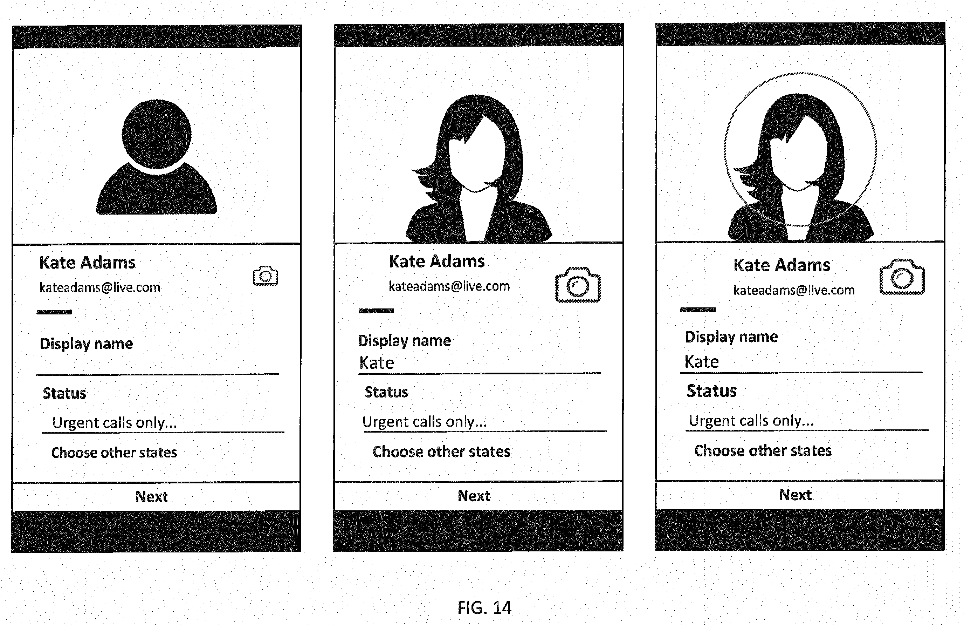

Figure 14 shows an example interface that may be displayed to the user, so as to enable a user to select a profile picture. The HiveOut application presents this interface to the user before the user is able to access the group page view.

The flash cards also indicate the total number of messages and/or group board items that have been added to a particular group since the user last logged in to the group page (shown as a new item icon 84). For example, the flash card associated with the "Homework assignment" group indicates that 12 new messages and/or board items have been added to the group since the user last logged in to the group page. Alternatively, the flash cards may indicate the total number of messages and/or group board items that have been added to a particular group, since the user last viewed the group page view.

Figure 9 illustrates a further example of a group page 92, and a group flash card display interface 94.

The group page 92 shows other information that may be displayed on a group flash card. For example, the flash card may include an indication of the hash tags that were used to mark an item recently posted to the group board (e.g. #viva is displayed with the "Emma shared a word file" notification). The use of hash tags to mark messaging and/or board content will be described later, in reference to figures 10 and 11.

The group flash card display interface 94 shows an example of a group flash card view that a user may be presented with, after having selected one of the groups displayed in the group page view.

The group flash card view shows, for a particular group, one or more flash cards that indicate:
- action items due on the user (e.g. a poll 95 that the user needs to cast a vote in)
- latest content added to the group board (e.g. a Word File that has been shared to the group)
- any new messages received from other users in the group.

In a preferred embodiment, the flash cards are ordered according to this priority - that is, a flash card that represents an action item due on the user is shown first (e.g. at the top of the group flash card view), followed by a flash card that represents any new content that has been added to the group, followed by a flash card that represents any new messages that have been posted to the group (e.g. at the bottom of the flash card view).

As in figure 8, one or more flash cards may also include an indication of the total number of messages or group board items that have been added to the group since the user last logged in (or viewed the group flash card view of that particular group). For example, a flash card associated with an item that was recently posted to the group board may include an indication of the number of items that have been posted to the group board since the user last viewed the group board of that group. Similarly, a flash card associated with a new group message may include an indication of the number of messages that have been posted to the group, since the user last viewed the messages of that group.

If no new content or messages have been posted to the group, the group flash card view shows the latest trending hash tags of the group. For example, a flash card may display the hash tags that have been actively used to mark messaging and/or board content within the last 30 days. This is shown in group flash card view 96, where, for example, indications 98 that the hash tags "#chemistry", "#viva", "#thermodynamics", "#presentation" and "#Electrochemistry" have been used to tag messaging and/or board content posted in the "Thermodynamics group". Marking messaging and/or board content with a hash tag may assist a user in searching for specific messaging and/or board content, as described in reference to figures 10 and 11.

If there are no new messages or content or trending hash tags, the group flash card view may display a flash card that indicates the last message and/or content that was posted to the group, based on time data associated the message and/or content. In flash card view 94, no messages have been posted to the group, and so a separate flash card 97 provides an option to the user to "Start a conversation". When the user interacts with "start a conversation" option, the HiveOut application activates the messaging mode, thereby enabling the user to write and send a message to the users in the group.

Figure 10 illustrates an example group messaging display interface 102 that a user may view when operating the HiveOut application in the group messaging mode. The group messaging display interface 102 displays one or more messages that have been posted to the group. The group messaging display interface 10 is herein referred to as a "common group conversation thread".

The one or more messages displayed in the common group conversation thread may each be represented by an image, such as, for example, a call-out icon that contains the text of the associated message. As can be seen from figure 10, each message may also include an indication of the user that sent the message (e.g. the username of that user) and the time at which that user sent the message. Alternatively, the time may indicate the time at which the message was received at the mobile device being used to view the message. The message may also provide an indication of the users in the group that have viewed the message (e.g. "read by user B, user C").

In the case of a group containing multiple messages, the messages in the thread may be time-ordered. This is shown in figure 10 at the group conversation thread 102, where the two messages in the thread are displayed oldest to newest, as indicated by the time stamps displayed below the main body of each message. The HiveOut application orders group data objects (both messages and board content) in this way, based on the time data associated with each group data object, e.g. an associated time stamp stored in the memory 26. Alternatively the HiveOut application 7 may order messages according to some other time-criterion, such as newest to oldest.

When a user first opens the group conversation thread, the group conversation thread displays messages that have been received since the user last opened the group conversation thread. For example, the group conversation thread may display the message that was received least recently since the user last viewed the group conversation thread. This message may be indicated by a transient visual demarcation that disappears (or moves to a new location) the next time the user opens the group conversation thread.

The group messaging display interface 104 shows an example of a user interface that is displayed to a user upon the user inputting text into the "type your message here" field of interface 102. As can be seen at display interface 104, the user is presented with a set of possible markers to mark the message with. These markers may be related to the text that the user has input to the message. For example, the user may be given the option to mark a message with a hash tag, where the hash tag corresponds to one or more words contained in the message, or one or more similar words (similar in spelling or semantic meaning). This is shown at display interface 104, where the user is given the option to mark their message with one or more of the "#Files", "#Filing", "#Filler" and "#Fillet" hash tags, based on the user having typed "fil".

Additionally or alternatively, the user may be given the option to mark a message with a marker that has been previously used to tag other messages and/or board content posted in the selected group. For example, these markers may correspond to recent markers used to tag messaging and/or board content data, or the markers most frequently used by users to tag other messaging and/or board content data posted to the group.

In an alternative embodiment, each message (and/or board content) may be automatically tagged with a marker, based on the HiveOut application analyzing the content of the message (or board content).

Figure 11 shows an example in which a user is given the option to mark their message with the "#chemistry" marker. This may be presented to the user before the user begins to input the word "chemistry" into the "type your message here" field. For example, the HiveOut application may execute an algorithm so as to predict a relevant marker, based e.g. on the text input to the message and the previous messaging and/or board content posted to the group.

Generally, the markers are used to indicate the "theme" of a group data object (be it a group messaging modality object or group board modality object) - e.g. a topic or subject to which it relates.

A user may search for group data objects pertaining to a particular subject or theme by inputting one or more search terms to a search field. The search may be limited to a specific group, or a plurality of groups, depending on whether the user is viewing the group page view or the group messaging or group board view of a particular group. The one or more search terms may correspond to the one or more hash tags that were used to mark the group messaging modality data objects or group board modality data objects in at least one of the groups. Additionally or alternatively, a user may search for group data objects that are associated with a particular user or a particular priority.

In the case of a user searching a specific group, the inputting of one or more search terms by the user may cause the HiveOut application to search, within the group, for group messaging modality data objects and group board modality data objects that match the one or more search terms. If one or more matches are found, the HiveOut application receives an interface update instruction that causes both the group messaging and group board display interfaces to be updated so as to display the corresponding group data objects that match the one or more search terms. The HiveOut application may identify a match between a group data object and the one or more search terms by determining whether a group data object contains a reference to the one or more search terms (either separately, or as part of the content in the group data object's content field).

The group data objects that are actually displayed to the user will depend on whether the user is operating the HiveOut application in either the group messaging or group board modes. For example, if the user is viewing the "Homework assignment" group (see figures 10 and 11) in messaging mode, and searches for the term "chemistry", the messaging display interface will be updated so as to display the messages that contained the term "#chemistry". In the case where there are several messages containing this term, these messages may be time-ordered, according to e.g. oldest-newest.

As noted earlier, the HiveOut application may update both the group messaging and group board display interfaces in response to the user performing the search, irrespective of the mode in which the user is operating the HiveOut application.

For example, if, whilst performing a search, a user is in the messaging mode of a particular group, and switches to the group board mode of the same group, the user will be presented with any group board content that matched the search term (e.g. marker) that was searched for in the messaging mode. By updating the display interfaces in this way, the user does not need to perform multiple identical searches each the time the user navigates to a different display interface within a selected group.

In a first embodiment, the HiveOut application automatically updates the display interface of one mode, as and when the user performs a search in the 'other' mode.

In a second embodiment, the display interface of the 'other' mode may be updated in response to the user switching from one mode to the other. The operation performed by the user to switch between the two modes is referred to as a "mode switch instruction". This operation may include a gesture made by the user, such as, for example, a swipe gesture.

Figure 8 shows an example in which a user is viewing the group page view. The user may search a plurality of groups for group data objects by interacting with the icon shown at 88. By inputting a term such as e.g. "chemistry" the group page view may be updated so as to display the groups in which the "chemistry" marker was used. These groups may be ordered according to how recently the marker "chemistry" was used to mark a group data object in each group.

Figure 12 shows an example of a filtering icon (122a and 122b) that a user may interact with so as to search for a search term in the group messaging or group board modes.

Figure 12 illustrates an example group messaging display interface (showing a group conversation thread) 121 and group board display interface 128 (showing a group board) that is displayed to a user belonging to the "Homework assignment" group.

The group board 128 shows an item of content 124a posted to the group, and the group messaging interface 121 shows a notification 124b that a user has posted the item 124a to the group board, as described in further detail below.

The item may be represented as, for example, a flash card, where the flash card provides an indication of the user that posted the item, the type of item that was sent (e.g. a title/caption), and the time at which the item was sent to or received at the user's device. The flash card may also show any markers used to mark the shared content.

Generally, any content posted to the group board is shown as a collection of items that a user may navigate, using e.g. a scroll bar. Again, each item may be represented as a flash card. The flash cards may be ordered according to the time each corresponding item was posted, or alternatively, a user may mark a particular item with a higher priority and this item may be displayed at the top of the group board.

When a user first opens the group board, the group board displays any items that were added since the user last opened group board. The least recent item that was added to the group board since the user last viewed the group board may be indicated by a transient visual demarcation that disappears (or moves to a new location) the next time the user opens the group board.

The table below provides examples of the types of content that a user may add to the group board, and how this content may be displayed on the group board.

| **Type** | **View on board** |
|---|---|
| Poll | Poll widget |
| Check lists | List widget |
| Calendar date & time | Calendar widget that shows the date and time of an event |
| Links | Inline preview for the site |
| Photos/Camera | Photo viewer inline |
| Other file types: documents, spreadsheets, presentations, PDFs | Inline preview |

Each type of content may have an associated preset template that a user must fill in before the content can be posted as an item to the group board.

In figure 12, the flash card shows that a user, user Julian, shared a Word File with the other users in the "Homework assignment" group on May 20th, at 1:30 pm. The flash card also shows that the Word file shared by Julian has been marked with the markers: "#homework", "#proposals" and "#assignment". These markers may have been selected by the user, prior to sharing the content. Alternatively, these markers may have been automatically selected by e.g. the HiveOut application or mode-duality server, based on an analysis of the Word File.

In the example of figure 12, a user, e.g. user Elizabeth Hannks, is operating the HiveOut application in messaging mode. At a first time, t1, the group conversation thread shows that no users have currently posted message to the group conversation thread (i.e. before 1:30 pm, May 20th). At a later time, t2, i.e. 1:30 pm, user Julian posts an item to the group board. A new group data object is generated for this item and transmitted to each of the user devices associated with the other users in the group (including Elizabeth's user device).

On receiving the new group data object, the HiveOut application (running e.g. at Elizabeth's user device) identifies the modality indicator of the group object as corresponding to a group board modality data object. In response to this, the HiveOut application generates, in the memory of the respective user device, a notification that corresponds to the new group board modality data object. This notification is displayed as a message in the group conversation thread (i.e. on the group messaging display interface), thereby alerting any users viewing the group conversation thread that a new item has been posted to the group board. Each time the HiveOut application receives a new group board modality data object, the group messaging display interface may automatically update so as to display a corresponding notification. An example of this is shown in figure 12, where, the conversation thread shows a notification 124b that user Julian shared a Word file at 1:30 pm, May 20th.

The notification may be selectable - that is, a user operating the HiveOut application in messaging mode may select the notification so as to view the corresponding group board content displayed as an item posted on the group board. In the example of figure 12, a user selecting the "Julian shared a Word file in the group board" notification 124b causes the HiveOut application to switch to the group board mode, where the Word file is displayed as a flash card 124a. The flash card provides an indication of the markers used to mark the file, and the time at which it was sent to or received at the user device. By selecting the flash card 124a, a user may view the Word file at their device (e.g. by downloading it and opening it in another application).

The notification 124b on the group messaging interface is a system notification that is generated and displayed automatically, i.e. the user "Julian" has not had to send a separate message in the group messaging interface to inform the group of his new Word file.

While the embodiment described above has been described in relation to a notification being generated in response to a new group data object being added to a group, this is not the only requirement for generating a notification. For example, users may be able to delete, favourite and/or edit content posted to a group's group board. This in turn, may result in a notification automatically being posted in the group conversation thread of that group.

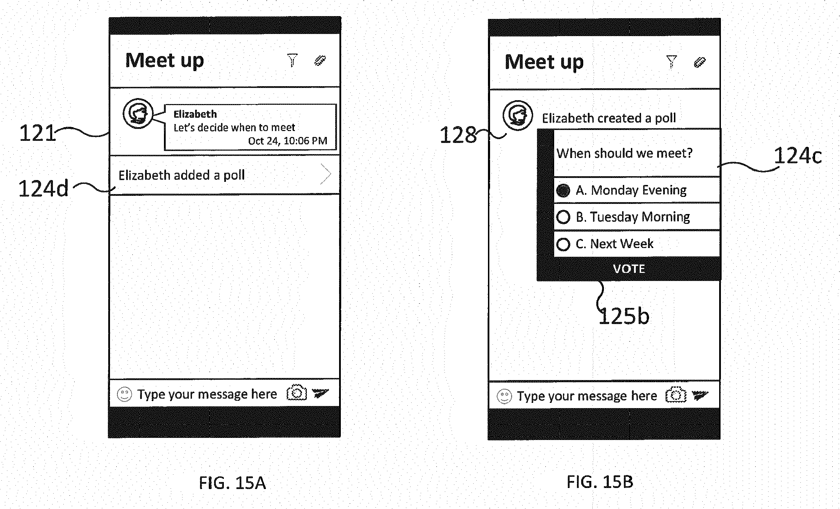

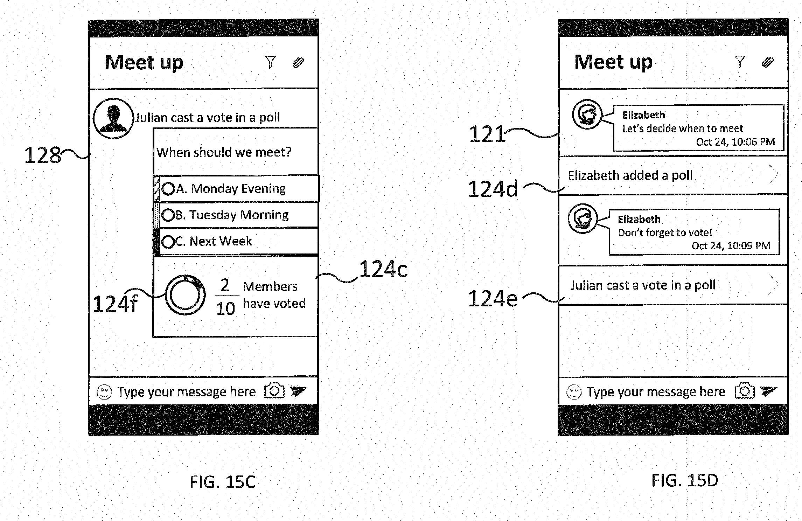

Figures 15A to 15D shows a second example of how system notifications on the group messaging interface 121 pertaining to items on the group board interface 128 may be generated. Figure 15A shows the group board interface 121 at a time shortly after another user Elizabeth has sent a group message and then created a poll. A notification 124d of the creation of the poll is displayed on the group messaging interface, after her message (note the visual format of the notification 124d is different from that of figure 12). The notification 124d is selectable and, in response to the user selecting the notification 124d, the HiveOut UI switches to the group board interface 128, and displayed the poll as a highlighted group board item 124c, highlighted by a visual (partial) border 125b. The item 124c is highlighted as a consequence of the user selecting the corresponding group board notification 124c to switch interfaces, so that the user known which item on the group board interface 128 corresponds to the notification 124d they selected. In this example, part of the border 125b forms a selectable vote option, which the user can select to vote in the pole once he has selected one of the options of the poll. Figure 15C shows an example of the group board interface 128 after the user (who is "Julian" in this example) has voted in the poll. The item 124f has been updated to show information about how group members have voted so far, which includes a graphic 124f conveying the proportion of votes for different votes cast so far, in which different options are represent using different visual effects (e.g. colour, shading etc.). Figure 15D shows the group messaging interface at a time when the user has voted in the poll. As can be seen, a new notification 124f of the user's vote is now displayed on the group messaging interface 121. In this example, the user cast his vote after Elizabeth had sent another group message, so the second notification 124e if displayed after this second message in the sequence of messages.

Figure 13 illustrates another example in which the actions performed by a user operating the HiveOut application in one mode, causes the interface associated with the other mode to update its display. This update may be performed automatically, or, in response to a user performing a mode switch operation. In a preferred embodiment, the HiveOut application updates the display interface of the other mode automatically - this embodiment is described below. In particular, figure 13 demonstrates how the user manually scrolling though one of the interfaces causes an automatic scroll though the other interface by a corresponding amount.

For example, figure 13 shows a later example of figure 12, in which more messages have been subsequently posted to the group conversation thread. These messages may be actual messages and/or notifications that were generated in response to a user posting content to the group board. While these messages are not explicitly shown (i.e. only the notification associated with Julian's Word file is shown), their existence is indicated by a scroll bar 120a.

The scroll bar 120a enables the user to navigate to different points in the group conversation, e.g. to the messages that were posted after notification 124. The user may select the scroll bar (i.e. the user may provide a "scroll input") and drag it in a certain direction so as to view messages that correspond to a certain criterion (e.g. time of receipt).

As the user scrolls through messages in messaging mode, the HiveOut application updates the messaging display data 42, thereby updating the group messaging interface so as to display the messages that correspond to the position of the scroll bar. For example, as the user drags the scroll bar downwards, newer messages may be displayed. Likewise, older messages may be displayed as the user drags the scroll bar upwards. A user may first perform a search in the messaging mode, and then scroll through the messages in the same manner. This may limit the number of messages that a user needs to scroll through in order to locate a desired message.

In the first embodiments, as a user scrolls through the messages displayed in the messaging mode of a selected group, the HiveOut application updates the group board display data 44 in parallel to scroll through the collection of items posted on the group board, by a corresponding amount.

The amount of scrolling through the items posted on the group board may depend on any time data associated with the sequence of messages that are being displayed in the messaging mode. For example, if the group board messaging display interface is displaying a sequence of messages that span a particular time interval, the HiveOut application may identify this time interval and use it to update the group board display interface so as to display data items that were posted in a time interval that overlaps (fully or partially), with the time interval spanned by the sequence of messages. This may be useful, where, for example, messages are added to the group conversation thread more frequently than items are posted to the group board, and therefore the spatial displacement of the scroll bar in the messaging mode may correspond to a different time interval in the group board mode.

If, after having performed a scroll input, the user chooses to switch from the messaging mode to the group board mode by performing e.g. a swipe gesture, the group board display interface will display only those items that were posted around the time interval associated with the sequence of messages that the user was previously viewing. Hence, the user does not need to navigate the messaging and group board modes independently - the user can navigate both modes simultaneously, irrespective of the whether the user is in the messaging or group board modes. By updating both display interfaces in this way, the context from the first mode is preserved when a user switches to the second mode.

An example of the above is shown in figure 13. In figure 13 it can be seen that, a notification is displayed in messaging mode with a time stamp of "May 20th, 1:30 pm". As a result of the user scrolling in the messaging mode, the group board display interface is automatically updated so as to scroll to any content that was posted around a similar time. In this example, the group board is updated so as to display two items that were posted to the board on May 20th between 1:30 - 7:30 pm, indicated by flash cards 124a and 126. If the user is operating the application in messaging mode and switches to the group board mode, the user will see these two items posted on the group board.

It will be appreciated that whilst the scrolling and switch operations described above have been described with reference to a user switching from a messaging mode to group board mode, the same method may be applied (in reverse) to a user switching from the group board mode to the messaging mode.

That is, the scrolling action of a user in the group board mode may cause the messaging display interface to be updated, so as to scroll through the messages in the group conversation thread by a corresponding amount. Again, the messaging display interface may be updated so as to display a sequence of messages that span a time interval that overlaps (partially or fully) with the collection of items that are displayed at the group board display interface. For example, if a user in group board mode, viewing flash card 124a, switches from the group board mode to the messaging mode, the group conversation thread will show the notification that was posted to the group conversation thread in response to that content being posted to the group board.

In the second embodiments, where the display interface associated with the 'other' mode is updated in response to the user performing a mode switch instruction (e.g. a swipe gesture), the timing relationship between the items shown in each interface will be preserved.

For example, when the group board display interface is updated in response to the user switching from the messaging mode to the group board mode, the items displayed on the group board will span a time interval that overlaps (partially or fully) with the sequence of messages that were previously displayed in the messaging mode. Likewise, in response to the user switching from the group board mode to the messaging mode, the messaging display interface will be updated so as to display a sequence of messages that overlaps (partially or fully) with the time interval spanned by the items previously displayed on the group board. As in the preferred embodiment, the timing relationship that arises as a result of a user performing a search and scrolling through results will also be preserved when switching from one mode to another.

The main difference between the first embodiment and the second embodiment, is that in the second embodiment, the user must perform the mode switch instruction, before the display interface associated with the 'other' mode is updated.

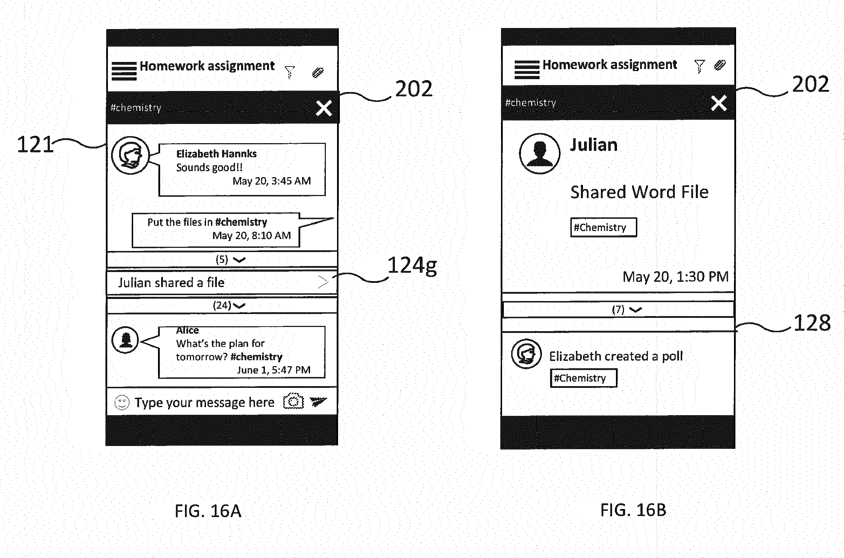

Figures 16A-16B show another example of the coupling of the group messaging and group board interfaces 121, 128 to one another. Figure 16A shows how the group messaging interface 121 may be filtered by a currently selected hashtag - "#chemistry" in this example, which has been selected by the user. An indicator 202 of the currently selected hashtag is displayed near the top of the interface 121, and includes a dismiss option that the user can select to revert to an unfiltered view. Messages that include the currently selected hashtag are shown, and in some cases some limited, and closely related messages that do not include the hashtag are also shown - for example, a message sent by the user which includes the currently selected hashtag is shown, and the message received immediately before that message was sent is also shown even though the received message does not include the hashtag (on the assumption that the received message is likely to relate to the topic of the hashtag). A notification 124h of a shared file on the group board interface 128 is also shown, because the shared file is also tagged with the currently selected hashtag #chemistry as can be seen in figure 16B. When the user switches to the group board interface 128, e.g. by swiping or selecting the notification 124g, the user's selection of the hashtag is maintained, such that the group messaging interface 128 is filtered by the same hashtag #chemistry without the user having to select it again, as shown in figure 16B. The indication of the currently selected hashtag 202 remains displayed on the group board interface 128. As in the above examples, the time interval spanned by the group board interface after the switch at least partially overlaps with that spanned by the group messaging interface before the switch.

A user can create a new group and add any user e.g. from their organization (by searching for them). To get create the new group, a group creator need only specify a group title for the group. If they wish to add more details they can - at the time of creation or later. There is no minimum number of members to get started with.

A user can search and add a new member to an ad-hoc group only. At any point, any member (with permission to do so) can invite a new member. A new member will have access to the entire history of the group upon joining. A new member can be invited to join an ad-hoc group via email. If the invited member is a registered HiveOut user, they will be added to the group as soon as they accept. If the invited member is not a registered HiveOut user, they get a link via email to install the HiveOut app. If the new user registers using the same email/mobile number, they are presented with all group invites sent to the same. If the new member is not on HiveOut, users can search for them and add them. The HiveOut app can provide a list of all members, indicating how long ago each member was active.

Users can share multimedia, for example photos or videos, or links (e.g. links to photos or videos) via the group messaging interface, in the manner of some conventional dedicated messaging apps. These do not get promoted to the group board interface automatically, but can be promoted manually.

Users can post content to the group board from an external app. In response to a user selecting to share content to the group board from another app:
1. the HiveOut app opens;
2. the HiveOut app displays a list of groups they are part of;
3. the user can select any (one) group to post too;
4. the user can specify a title/hashtag(s) as applicable;
5. the user selects a create option displayed by the HiveOut app to complete post to group board action.

The group board is define as a share target within the OS 8 (where supported), such that other apps can select content external to the HiveOut app to be shared to the HiveOut app. For example, content can be selected via a UI of the OS 8, with an option provided via the OS UI of sharing the content to the HiveOut app 7. In response, a list of active groups the user is part of is provided, and when they select which group they want to share to, the content is directly added to the group board. A system notification for the same is posted on the messaging interface.

A selectable option to navigate to the top or bottom of the group board (which is sorted from oldest to newest) is also displayed on the group board interface, though this is not shown explicitly in the figures.

### Interoperability with other applications:

Figures 6A and 6B illustrate the flow of messaging or board content 52M/52B between the dual-modality server 10 and each of the mobile devices 6a, 6b, 6c and desktop PC 18.

Figure 3 illustrates a more detailed view of the dual-modality (i.e. HiveOut) server shown in figure 1. The HiveOut server 10 comprises a network interface 34 for receiving and transmitting group data objects from and to the mobile devices 6a, 6b and 6c, over the communication network 2.

The network interface 34 is connected to the HiveOut server's processor 32, on which dual-modality management code 36 is executed. The dual-modality management code 36 stores each group data object 50 received via the network interface 34 in the first data store 12, so that it is accessible to the HiveOut instances 7a, 7b, 7c in the manner discussed above.

Returning briefly to figure 1, as noted above, the back end system 20 comprises an interoperability server 14 in addition to the HiveOut server 10.

The interoperability server 14 allows certain content shared using the HiveOut application to be accessed using a different and technically incompatible application, by storing a version of this content in a second, separate data store 16 (see below). By way of example, figure 1 shows a computer device 18, such as a laptop or desktop computer device (e.g. PC, Macintosh etc.) available to the first user 4a. The laptop / desktop PC device 18 executes a different application 19 - different from and technically incompatible with the HiveOut application - that enables the laptop / desktop device 18 to access some of the content shared via HiveOut - in particular, the group board content. This means that users can post substantive items to the group board using their mobile devices and view such items using their mobile devices, but then view and edit them later using the computer device 19, which may be more suitable e.g. due to its larger display, wider range of input devices etc.

The dual-modality management code 36 executed on the HiveOut server 10 reads the modality indicator 53 of each group board data object it receives, and thereby determines its modality. Based on the modality indicator 53, the dual-modality management code 36 determines whether to make a copy of the content of each group data object, and forwards this copy to a second data store 16. In the described embodiments, the content of all group board data objects (and only that content) is copied to the second data store 12.

Note that, in determining the modality, the HiveOut server 10 need only read the modality indicator - as noted, this may be a single flag bit, which requires minimal processing resources to read. There is no need for the HiveOut server 10 to read any of the other field in determining whether or not to duplicate a given data object to the second data store 12.

In figures 6A and 6B, a first mobile device 6a receives inputs from a first user, user A, to share a group data object with users B and C, associated with mobile devices 6b and 6c. The users associated with these mobile devices form a group of users (e.g. identifiable by a group indicator).

The mobile device 6a transmits the group data object in a format that is compatible with the protocol used to transmit data between the HiveOut applications running at mobile devices (6a, 6b and 6c) and the dual-modality server 10. That is, the group data object is transmitted in a format that can be received and processed according an application programming interface (API) of the HiveOut server's, labeled API1.

The HiveOut server 10 stored all received data objects in the first data store 12, as described above. Thus, both messaging or board content (labelled 52B/52M) is stored at the first data store 12 for retrieval by the mobile devices 6a, 6b and 6c, using the data object structure of figure 5.

The HiveOut server 10 also generates a copy of any board content included in the group data object received from mobile device 6a. This copy of the board content (52B) is stored to a second data store 16, which can be accessed via the interoperability server 14.

A different and technically incompatible application 19 running on the laptop/desktop PC 18, is access and retrieve the board content stored at the second data store 16 by communicating with the interoperability server 14, over the network 2. The interoperability server 14 may be configured to transmit board content to the desktop PC according to a protocol that is different from the protocol used to transmit data between the mobile devices (6a, 6b and 6c) and the dual-modality server 10, according to an API of the interoperability server labelled 'API2' in figures 6A and 6B, that is different from and technically incompatible with the HiveOut server API (API1).

Conversely, the application 19 may enable a user to add to the board content that is stored at the first and second data stores (described below).

In some cases, a conversion module 62 processes group board data objects to render their content in a format that is incompatible with and thus interpretable by the different application 19. For example, where the data object structure of figure 5 is not interpretable by the different application 19, the content may be re-formatted into a different data structure that is compatible with and interpretable by the different application 19, which as noted may be a SharePoint or OneNote application, or a Web browser (in which case the conversion module 62 may generate an HTML output for use in displaying the content by the Web browser).

That is, the group messaging data objects are converted to a format that can be received and processed according to the group board content server API, i.e. 'API2'. This conversion may occur before or after a copy of the group board content is stored at the second data store 16, as in figure 6a, or the format may be converted if and when it is retrieved, as in figure 6b. The conversion module 62 may be implemented by the HiveOut server 10, the interoperability server 14 or a different server altogether. Alternatively, its functionality may be distributed across two or more such servers.

Figure 6A shows an example system in which the conversion is performed before any group board content data is copied to (and stored at) the second data store 16.

As can be seen in figure 6A, the conversion module 62 has an input connected to the dual-modality server 10 and an output connected to the second data store 16. A copy of the board content (52B) is received at the input of the conversion module 62 and a conversion operation is performed. As noted above, the conversion operation corresponds to converting the board content (52B) into a format that is compatible with the protocol used to communicate board content between the interoperability server 14 and the external application 19. The conversion module 62 outputs the converted board content 64 to the interoperability server 14. The interoperability 14 forwards the converted board content 64 to application 19 running on desktop PC 18, using the protocol employed by the group board content server's 'API2' interface.

In an example embodiment, the mobile devices 6a, 6b and 6c may be mobile or tablet devices and have a particular version of the HiveOut application installed (i.e. a version that is configured to handle messaging and board content at those kinds of devices). One of the users of the group (e.g. user A) may be away from their mobile device (6a, 6b or 6c) and may wish to access the board content via a different device, such as a laptop or desktop PC 18, using a different application 19, such as a Web browser.

The conversion module 62 converts the group board content associated with the mobile version of the "HiveOut" application into a format that is compatible with the Web browser. Hence, user A is able to access and view the board content originally sent to the dual-modality server 10, by directly retrieving the converted copy from the second data store, through the interoperability server 14.

Figure 6B illustrates an example system in which the conversion is performed after the board content is stored at the second data store 16. Rather than storing converted board content 64 at the second data store 16, in figure 6B, the second data store 16 stores copies of the original board content 52B and the conversion is performed by the conversion module 62, as and when the board content is transmitted to another application 19 operating at the same, or a different device, such as the desktop PC 18. This may be advantageous in a situation where the application 19 at e.g. desktop PC 18 can provide an indication to the conversion module 62 of an appropriate format in which to transmit the board content to the application 19.

While figures 6A and 6B have been described in the context of a mobile device 6a transmitting messaging or board content to mobile devices 6b and 6c, it will be appreciated that the messaging or board content may be transmitted from the e.g. desktop PC 18 to the mobile devices 6a, 6b and 6c.

For example, user A may use the application 19 at desktop PC 18 to share a group data object with the mobile devices 6b and 6c. Any board content associated with the group data object may be stored at a first data store 12, and copied to a second data store 16, where the board content stored at the second data store 16 may be converted into a format that is compatible with the HiveOut applications associated with mobile devices 6a, 6b and 6c. Alternatively, the first and second data stores may store the board content in the same format, and the conversion may be performed as and when the board content is transmitted from the second data store 16 to the mobile devices 6b and 6c.

It should be noted that in the embodiments described above, only the board content has been described as being copied to a second data store. This is because the board content is more likely to benefit from the conversion operation aforementioned. For example, the size and type of display associated with a particular device may need to be taken into account before the application (e.g. 19) can provide the user with a suitable user interface (group board display interface) in which to view the board content.

To further illustrate contexts in which embodiments of the present subject matter may be used, two example scenarios are provided below. It should be noted that these examples are merely a representative (and not exhaustive) list of the activities performed by the users in a group.

### Example 1 - Working on a class assignment

Riya has a new group project for her Advertising class. Her group has been finalized. They have to create an awareness campaign for "Women's safety". Riya's heard her friends raving about HiveOut. They say it helps "work together". She decides to give it a run.

### Creating a group

On first use Riya logins via Facebook and her profile is all setup (in one tap).

The app shows her FB groups including her class section group - Rohan, Mihir, Sanya. She quickly selects her study group folks (to HiveOut a new conversation for her assignment). The exchange student - Mike - on their group isn't on the Facebook section group, but he shared his email address. Riya adds him to the HiveOut as well. All her group members join HiveOut.

### Conversing while working with content simultaneously

Riya initiates a discussion about what the mode of delivery for their awareness campaign should be. Mike suggests doing a repeatable theme. What's that someone asks? Mike explains that a repeatable theme is a situation that plays out again and again calling out the need for a company's product. Discussion ensues. He then puts a bunch of links and documents on the group board and tags it with #mode for everyone's convenience. Riya looks at all the great material Mike shared and is convinced this is a good idea.

Riya points out that some folks aren't active right now. She suggests floating a poll so they can know if they have consensus. She creates a poll for zeroing in on "mode of delivery" for the campaign. She hashtags it with #mode.

### Accessing related items quickly

Rohan has been away in class while the discussion about mode of delivery was going on. When he finally opens the app - he immediately sees that the group is waiting for his vote to decide something. He goes straight to the poll.

He views all the voting options. But isn't sure "repeatable theme" means. He notices the poll is tagged with #mode. The group board is immediately filtered on all the content that was added for #mode by Mike and others. He finds an example of repeatable theme and a bunch of links to better understand the concept.

He swipes back to the conversation view. It's filtered on #mode as well. He explores the conversation around #mode (hash-tagged bits and the in between bits as well). He's happy with this direction for the campaign.

He goes back to the whiteboard and votes for "repeatable theme".

### Forming sub-groups

Sanya and Mihir recommended a bunch of ideas for illustrations to the group using illustrations. Everyone else felt they were the right people to pick this up. So they create a sub-group - illustrations (from the #illustrations tag). Promoted from illustrations. So they have whatever they discussed and shared with #illustrations already on their sub-group thread.

While chatting in the sub-group, they keep adding their designs to the group board (and note it's pivoted on illustrations sub-group when they swipe right from the illustrations sub-group) for everyone else to see.

### Quickly getting up to speed

Riya hasn't heard from the illustrators for a while. She's wondering what's happening with them - the ad text she's working on need to be tied well together. She checks the group board for what the "illustrations" sub-group is up to. And she's happy to see their latest designs. Whenever they add something new to the board, she sees a notification on the group for it.

The group has been discussing that they need to meet to complete the final deliverable. They have been going back 'n' forth over venue/time to meet. Sanya has been busy with her other commitments so she hasn't been able to keep track of this conversation. She sees a calendar invite on her phone for the group meeting. When she opens the group, she sees the venue and other details are posted on the group board.

### Example 2 - Group Outing

Rohit, Ranveer and Astha come up with a Goa road trip plan over dinner. They want to start planning immediately. Rohit creates a HiveOut group - "The Goa road trip" and adds the other two.

### Selecting membership

Ranveer and Astha join the group. All three send out invites to their friends who might be interested in joining in. About 25 invites are sent. Only 10 of their friends accepted the invite and joined "The Goa road trip" HiveOut group.

The trio already knew that everyone would not be available. Sending out invites ensured no one felt left out. And they got a quick "show of hands" from the ones who were keen.

### Sub-groups help keep discussions focused and eliminate noise

The group is travelling in three cars to Goa. Car assignments are done.

Ranveer (driving the Scorpio) creates a "Scorpio gang" sub-group to discuss logistics with others travelling with him. In the sub-group, they discuss pick-up points, snacks and music for the drive etc. They post all these details on to the group board for quick access later.

Priya - Astha' s school friend - is also travelling in the Scorpio. She's not very well-acquainted with Ranveer and the others travelling with her. So she was a little nervous about the travel initially. But chatting with the "Scorpio gang" has put her at ease. They've gelled well together and she's looking forward to the journey now.

Similarly, the other car groups also have their travel plans set - sans any confusion and needless noise.

En route to Goa, the gang plans to eat at a dhaba in Raichur. Once the first car enters Raichur they let the others know. The car groups decide to split up and look for a decent place to eat. The three car groups coordinate their movement via HiveOut.

Location updates are shared over chat while travelling. One car finally spots a nice looking dhaba, and shares a picture of it with the rest (over chat). All the three groups approve and they decide to stop there. The first car group puts up landmarks on the group board for the other two cars to reach.

### Finding memories

A gang of thirteen is bound to have zillion pictures from a weekend trip. Getting to the good ones after the trip would be quite a tall order. But "The Goa road trip" gang has already discussed this "serious" issue. They decide everyone will keep sharing their phone photo streams over chat. And then the super popular ones or a few personal favorites can be moved to the group board.

And so while in Goa, the photo bursts continue. They tag photos to make sorting easier for later. The popular photos immediately get moved to the group board.

The "Scorpio gang" had a blast on the road. They have a lot of fun videos from the road trip. They add these to the group board as well. After the trip, Priya (from the Scorpio gang) filters the group board for her favorite tags and of course the "Scorpion gang". She's able to quickly view and easily download all her favorite memories in one go.

### Mark for reference later

The other "golden rule" the group (more specifically, Rohit the budgeteer) laid down was - every expense item would be added to group chat with hashtag 'budget'. During the trip - everyone kept adding expenses they paid for along with expense details. If any expense was disputed, it was settled over chat.

This made it really easy for Rohit to calculate cost and dues per head later. He just filtered all the comments with hashtag 'budget'. After that with a little help from Excel, he was done with all his calculations. He then posted his calculations spreadsheet onto the group board for everyone to view.

Generally, any of the functions described herein can be implemented using software, firmware, hardware (e.g., fixed logic circuitry), or a combination of these implementations. The terms "module," "functionality," "component" and "logic" as used herein generally represent software, firmware, hardware, or a combination thereof. In the case of a software implementation, the module, functionality, or logic represents program code that performs specified tasks when executed on a processor (e.g. CPU or CPUs). The program code can be stored in one or more computer readable memory devices. The features of the techniques described below are platform-independent, meaning that the techniques may be implemented on a variety of commercial computing platforms having a variety of processors.

For example, the user terminals may also include an entity (e.g. software) that causes hardware of the user terminals to perform operations, e.g., processors functional blocks, and so on. For example, the user terminals may include a computer-readable medium that may be configured to maintain instructions that cause the user terminals, and more particularly the operating system and associated hardware of the user terminals to perform operations. Thus, the instructions function to configure the operating system and associated hardware to perform the operations and in this way result in transformation of the operating system and associated hardware to perform functions. The instructions may be provided by the computer-readable medium to the user terminals through a variety of different configurations.

One such configuration of a computer-readable medium is signal bearing medium and thus is configured to transmit the instructions (e.g. as a carrier wave) to the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may us magnetic, optical, and other techniques to store instructions and other data.

A first aspect of the present subject matter is directed to a computer-implemented method of effecting communications between a group of users, the method comprising executing a client application on a processor of a user device available to one of the users to implement the following steps: transmitting and receiving group data objects between the user device and at least one other device via a network, each of the group data objects comprising: an indication of user group denoting an associated one of a plurality of user groups, content for the associated user group, and an indication of modality denoting either a group messaging modality or a group board modality; the client application receiving a current selection of one of the plurality of user groups and, based on the indications of user group and the indications of modality, generating in memory of the user device for the currently selected group: (i) group messaging display data for displaying at least part of the content of the group messaging modality data objects associated with the currently selected group as a sequence of messages on a group messaging display interface, and (ii) group board display data for displaying at least part of the content of the group board modality data objects associated with the currently selected group as a collection of posted items on a group board display interface; the client application operating in a group messaging mode for the currently selected group by controlling the display based on the group messaging display data to display the sequence of messages on the group messaging display interface; and in response to a mode switch instruction, the client application switching to a group board mode for the currently selected group by controlling the display based on the group messaging display data to display instead the collection of posted items on the group board display interface, whereby a single application provides both group messaging and group board modalities for the same user group.

In embodiments, the steps may further comprise: receiving at the user device from the user content generation inputs; and generating by the client application a new group data object for transmission to the other device, wherein the new group data object comprises an indication of user group denoting the currently selected group and content derived from and/or selected based on the content generation inputs. The client application may include in the new group data object an indicator of modality that denotes:
- the group messaging modality if the content generation inputs are received whilst operating in the group messaging mode, or
- the group board modality if they are received whilst operating in the group board mode.

The indicator of modality may be one or more flag bits, e.g. a single flag bit.

Each of the group data objects may have a modality field, in which its indication of modality is held, and content field, in which its content is held.

Each of the data objects may also have a group field, in which its associated indication of user group is held.

The mode switch instruction may be instigated manually by the user.

For example, the mode switch instruction may be instigated by the user:
- performing a single gesture, whereby the client application switches from the group messaging mode to the group board mode in response to the single gesture, or
- selecting a notification pertaining to the group board display interface that is displayed on the group messaging display interface.

The single gesture may be a single swipe. For example, a swipe in a predetermined direction; in this case, a swipe in the opposite direction inputted in the group board mode may instigate a switch back to the group messaging mode.

If the mode switch instruction is instigated by the user selecting the notification, the client may update the group board display data in response to include highlighting data for displaying a posted item corresponding to the selected notification as a highlighted item on the group board interface, whereby that item is displayed as a highlighted item on the group board interface.

The steps may further comprise:
- receiving at the user device from the other device via the network a new group data object whose indication of modality denotes the group board modality and/or
- detecting an update to one of the group board modality data objects,
in response to which the client application updates the group messaging display data, wherein the updated display data is for displaying a notification of:
• the new group board modality data object or
• the update to the group board modality data object
on the group messaging interface.

The client application may be operating in the group messaging mode when the new group board modality data object is received or when the update is detected, whereby the notification is displayed on the group messaging interface in response thereto.

The update may be instigated locally at the user device, or remotely wherein data object update data identifying the data object to be updated and for updating the identified data object may be received at the user device via the network.

The notification may be displayed in the sequence of messages at a location in the sequence corresponding to a timing of the receipt of the new group board modality data object at the user device or a timing of its transmission from the other device or a timing of the update.

The notification may be selectable and, in response to the user selecting the notification, the client application may switch to the group board mode by controlling the display to display at least part of the content of the new group board modality data object as a new posted item on the group board interface.

The group board display data may be generated before the mode switch instruction is received, when the group board display interface is not being displayed. Alternatively, it may be generated after the mode switch instruction has been received, in response to the mode switch instruction.

The steps may further comprise: receiving an interface update instruction whilst the client is operating in the group messaging mode, wherein the client application updates both the group messaging display data and the group board display data in the memory according to the interface update instruction.

The group messaging display data may be updated according to the interface update instruction:
before the mode switch instruction is received when the group board display interface is not being displayed, or
in response to the mode switch instruction (i.e. after it has been received).

Alternatively, part of the display data may be updated before the mode switch instruction is received, and part of it in response to the mode switch instruction.

The interface update instruction may be instigated manually by the user.

The interface update instruction may be instigated by a scroll input from the user, wherein the client application updates: the group messaging display data to scroll through the sequence of messages, and the group board display data to scroll through the collection of posted items by a corresponding amount.

Alternatively, the interface update instruction may be instigated by the user inputting a search term (for example, a hashtag), wherein the client application may search the group data objects to locate one or more of the group board modality data objects that match the search term and one or more of the group messaging modality data objects that match the search term, whereby the same search term is used to search both modalities. In this case:
- the updated group messaging display data (i.e. as updated according to the interface update instruction) is for displaying at least part of the content of the located group messaging modality data items as one or more messages on the group messaging display interface; and
- the updated group board display data (i.e. as updated according to the interface update instruction) is for displaying at least part of the content of the located group board modality data items as one or more posted items on the group board display interface.

The search may be restricted only those data objects whose content comprises a piece of predetermined marker data, such as a hash character "#" whereby the search is restricted to hashtags.

The client application may display, for at least one of the group data objects (board or massaging modality) that matches the search term, content of at least one non- matching group data that does not match the search term but that is associated with the matching group board data object. For example, that was/were transmitted or received immediately before or immediately after the matching group board data object was transmitted or received. For example, a single non-matching data object that was transmitted or received immediately before or immediately after the matching data object was transmitted or received.

The interface update instruction may be instigated automatically in response to:
- receiving at the user device a new group data object whose indication of modality denotes the group board modality or
- detecting an update to one of the group board modality data objects;
   wherein the updated group board display data may be for displaying at least part of the content of the new or updated group board modality data object as a new or updated posted item on the group board interface; and wherein the updated instant messaging display data may be for displaying a notification of the new group board modality data object or the update on the instant messaging interface.

Each of the data objects may be associated with timing data in the memory, and the group messaging and group board display data may be generated based on the timing data such that a time interval spanned by the sequence messages at last partially overlaps with a time interval spanned by the collection of posted items.

According to a second aspect of the subject matter, a user device comprises a memory configured to hold a client application; and a processor connected to the memory and configured to execute the client application, wherein the client application is configured when executed on the processor to implement the method of the first aspect or any embodiment thereof.

According to a third aspect of the subject matter a computer program product comprises an executable client application stored on a computer readable storage medium and configured when executed on a processor of a user device to implement the method of the first aspect or any embodiment thereof.

According to a fourth aspect of the present subject matter, a computer implemented method of effecting communications between a group of users, the method comprising implementing by a computer system the following steps: receiving at the computer system via a network, from each of a plurality of client applications running on respective user devices, a respective plurality of group data objects generated by that client application, each of the group data objects comprising: content for the user group, and an indication of modality denoting either a group messaging modality or a group board modality; storing each of the received group data objects in a first remotely accessible data store, whereby the client applications running on the user devices can access the first data store via the network so as to access the group data objects of both modalities stored therein; accessing the indication of modality of each of the group data objects; and if the accessed indication of modality denotes the group board modality, separately storing a copy of the content of that group data object in a second remotely accessible data store, whereby a different application running on another computer device can access the second data store via the network so as to access the group board modality data object content stored therein.

In embodiments, the received data objects may have a format that is uninterpretable by the different application and the method may further comprise: applying by the computer system format conversion to at least one, and in some cases each, of the received group data objects of the group board modality, so as to render its content in a format interpretable to the different application.

The copy of that content may be stored in the second data store in that format or the format conversion is applied in response to the different application requesting the copy of that content. For example, format conversion may be applied to each received group board data object for storage in the second data store.

Alternatively, the format conversion may be applied in response to the different application requesting the copy of that content.

The different application is a dedicated group board application, such as a OneNote or SharePoint application.

Alternatively, the different application may be a Web browser, e.g. configured to provide OneNote or SharePoint access, either directly via HTML or via a suitable plugin to the Web browser.

The second data store may be a dedicated group board data store, wherein the content of any group data object whose indication of modality denotes the group messaging modality is not stored in the dedicated group board data store.

The user devices may be mobile devices and the client applications may be mobile applications, i.e. apps.

For example, each of the mobile devices may be a phone or tablet device.

The other computer device may be a laptop or desktop computer.

According to a fifth aspect of the present subject matter, a computer program product comprises data object management code stored on a computer readable storage medium and configured when executed by a computer system to implement the method of the fourth aspect or any embodiments thereof.

According to a sixth aspect of the subject matter, a computer system for effecting communications between a group of users comprises: a network interface configured to receive via a network, from each of a plurality of client applications running on respective user devices, a respective plurality of group data objects generated by that client application, each of the group data objects comprising: content for the user group, and an indication of modality denoting either a group messaging modality or a group board modality; and one or more processors, each configured to execute respective data object management code and thereby cause the one or more processors to implement the following steps:
- storing each of the received group data objects in a first remotely accessible data store, whereby the client applications running on the user devices can access the first data store via the network so as to access the group data objects of both modalities stored therein;
- accessing the indication of modality of each of the group data objects; and

if the accessed indication of modality denotes the group board modality, separately storing a copy of the content of that group data object in a second remotely accessible data store, whereby a different application running on another computer device can access the second data store via the network so as to access the group board modality data object content stored therein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method of effecting communications between a group of users, the method comprising executing a client application on a processor of a user device available to one of the users to implement the following steps:
transmitting and receiving group data objects between the user device and at least one other device via a network, each of the group data objects comprising: an indication of user group denoting an associated one of a plurality of user groups, content for the associated user group, and an indication of modality denoting either a group messaging modality or a group board modality;
the client application receiving a current selection of one of the plurality of user groups and, based on the indications of user group and the indications of modality, generating in memory of the user device for the currently selected group:
(i) group messaging display data for displaying at least part of the content of the group messaging modality data objects associated with the currently selected group as a sequence of messages on a group messaging display interface, and
(ii) group board display data for displaying at least part of the content of the group board modality data objects associated with the currently selected group as a collection of posted items on a group board display interface;
the client application operating in a group messaging mode for the currently selected group by controlling the display based on the group messaging display data to display the sequence of messages on the group messaging display interface; and
in response to a mode switch instruction, the client application switching to a group board mode for the currently selected group by controlling the display based on the group messaging display data to display instead the collection of posted items on the group board display interface, whereby a single application provides both group messaging and group board modalities for the same user group.

2. A method according to claim 1, wherein the steps further comprise:
receiving at the user device from the user content generation inputs; and
generating by the client application a new group data object for transmission to the other device, wherein the new group data object comprises an indication of user group denoting the currently selected group and content derived from and/or selected based on the content generation inputs;
wherein the client application includes in the new group data object an indicator of modality that denotes: the group messaging modality if the content generation inputs are received whilst operating in the group messaging mode, or the group board modality if they are received whilst operating in the group board mode.

3. A method according to claim 1 or 2, wherein the mode switch instruction is instigated manually by the user.

4. A method according to claim 3, wherein the mode switch instruction is instigated by the user:
performing a single gesture, whereby the client application switches from the group messaging mode to the group board mode in response to the single gesture, or
selecting a notification pertaining to the group board display interface that is displayed on the group messaging display interface.

5. A method according to any preceding claim, wherein the steps further comprise:
receiving at the user device from the other device via the network a new group data object whose indication of modality denotes the group board modality or detecting an update to one of the group board modality data objects, in response to which the client application updates the group messaging display data, the updated display data for displaying a notification of the new group board modality data object or the update to the group board modality data object on the group messaging interface.

6. A method according to claim 5, wherein:
the notification is displayed in the sequence of messages at a location in the sequence corresponding to a timing of the receipt of the new group board modality data object at the user device or a timing of its transmission from the other device or a timing of the update; and/or
the notification is selectable and, in response to the user selecting the notification, the client application switches to the group board mode by controlling the display to display at least part of the content of the new group board modality data object as a new posted item on the group board interface.

7. A method according to any preceding claim, wherein the group board display data is generated before the mode switch instruction is received, when the group board display interface is not being displayed.

8. A computer program product for effecting communications between a group of users and comprising an executable client application stored on a computer readable storage medium and configured when executed on a processor of a user device available to one of the users to implement the method of any of the preceding or the following claims.

9. A method according to any of claims 1 to 7, comprising:
receiving an interface update instruction whilst the client is operating in the group messaging mode, wherein the client application updates both the group messaging display data and the group board display data in the memory according to the interface update instruction.

10. A method according to claim 9, wherein the group messaging display data is updated:
before the mode switch instruction is received when the group board display interface is not being displayed, or in response to the mode switch instruction.

11. A method according to claim 9 or 10, wherein the interface update instruction is instigated manually by a scroll input from the user, wherein the client application updates: the group messaging display data to scroll through the sequence of messages, and the group board display data to scroll through the collection of posted items by a corresponding amount.

12. A method according to claim 9 or 10, wherein the interface update instruction is instigated manually by the user inputting a search term, wherein the client application searches the group data objects to locate one or more of the group board modality data objects that match the search term and one or more of the group messaging modality data objects that match the search term, whereby the same search term is used to search both modalities;
wherein the updated group messaging display data is for displaying at least part of the content of the located group messaging modality data items as one or more messages on the group messaging display interface;
wherein the updated group board display data is for displaying at least part of the content of the located group board modality data items as one or more posted items on the group board display interface.

13. A method according to any of claims 1 to 7 or 9 to 12, wherein each of the data objects is associated with timing data in the memory, and the group messaging and group board display data are generated based on the timing data such that a time interval spanned by the sequence messages at last partially overlaps with a time interval spanned by the collection of posted items.
